# EUROPEAN PATENT APPLICATION

(11) **EP 4 614 903 A1**
(43) Date of publication of application: **10.09.2025**
(21) Application number: 22964081.8
(22) Date of filing: 04.11.2022
(51) Int. Cl.: H04L 27/00, H04W 52/02

(54) **WIRELESS COMMUNICATION METHOD AND APPARATUS, DEVICE, STORAGE MEDIUM, AND PROGRAM PRODUCT**

(71) Applicant: GUANGDONG OPPO MOBILE TELECOMMUNICATIONS CORP., LTD., Dongguan, Guangdong 523860 (CN)
(72) Inventor: FU, Zhe, Dongguan, Guangdong 523860 (CN); HU, Yi, Dongguan, Guangdong 523860 (CN)
(74) Representative: Mewburn Ellis LLP
(86) International application number: PCT/CN2022/130048
(87) International publication number: WO 2024/092777

(57) **Abstract**

The disclosure relates to a wireless communication method and apparatus, a device, a storage medium, and a program product. The wireless communication method includes the following. A base station sends a network discontinuous communication configuration to a user equipment (UE), where the network discontinuous communication configuration includes a network discontinuous communication configuration for a cell and/or a network discontinuous communication configuration for the base station, which is beneficial to research on energy saving of a network side.

## Description

### TECHNICAL FIELD

The disclosure relates to the field of wireless communication technology, and more particularly, to a wireless communication method and apparatus, a device, a storage medium, and a program product.

### BACKGROUND

Currently, with rapid development of wireless communication systems, energy saving of the wireless communication system has become a hot issue for research.

Currently, there are lots of studies on energy saving of a user equipment (UE), but studies on energy saving of a network side are relatively less.

### SUMMARY

To this end, embodiments of the disclosure provide a wireless communication method and apparatus, a device, a storage medium, and a program product.

According to a first aspect, a wireless communication method is provided. The method includes the following. A base station sends a network discontinuous communication configuration to a user equipment (UE), where the network discontinuous communication configuration includes a network discontinuous communication configuration for a cell and/or a network discontinuous communication configuration for the base station.

According to a second aspect, a wireless communication method is provided. The method includes the following. A UE receives a network discontinuous communication configuration sent by a base station, where the network discontinuous communication configuration includes a network discontinuous communication configuration for a cell and/or a network discontinuous communication configuration for the base station.

According to a third aspect, a wireless communication method is provided. The method includes the following. A base station sends target information for a target cell or a target frequency to a UE, where the target information indicates to the UE to perform cell selection or cell reselection or access control, or the target information indicates to the UE to perform cell selection or cell reselection.

According to a fourth aspect, a wireless communication method is provided. The method includes the following. A UE receives target information for a target cell or a target frequency sent by a base station. The UE performs cell selection or cell reselection or access control according to the target information, or the UE performs cell selection or cell reselection according to the target information.

According to a fifth aspect, a wireless communication method is provided. The method includes the following. A UE performs a first behaviour, where the first behaviour includes at least one of: random access, data transmission, cell selection, cell reselection, handover, RRC state transition, system information acquisition, synchronization, camping, paging, or paging response.

According to a sixth aspect, a wireless communication apparatus is provided. The apparatus is applied for a base station. The apparatus includes a sending module. The sending module is configured to send a network discontinuous communication configuration to a UE, where the network discontinuous communication configuration includes a network discontinuous communication configuration for a cell and/or a network discontinuous communication configuration for the base station.

According to a seventh aspect, a wireless communication apparatus is provided. The apparatus is applied to a UE. The apparatus includes a receiving module. The receiving module is configured to receive a network discontinuous communication configuration sent by a base station, where the network discontinuous communication configuration includes a network discontinuous communication configuration for a cell and/or a network discontinuous communication configuration for the base station.

According to an eighth aspect, a wireless communication apparatus is provided. The apparatus is applied to a base station. The apparatus includes a sending module. The sending module is configured to send target information for a target cell or a target frequency to a UE, where the target information indicates to the UE to perform cell selection or cell reselection or access control, or the target information indicates to the UE to perform cell selection or cell reselection.

According to a ninth aspect, a wireless communication apparatus is provided. The apparatus is applied to a UE. The apparatus includes a receiving module and an executing module. The receiving module is configured to receive target information for a target cell or a target frequency sent by a base station. The executing module is configured to perform cell selection or cell reselection or access control according to the target information, or is configured for the UE to perform cell selection or cell reselection according to the target information.

According to a tenth aspect, a wireless communication apparatus is provided. The apparatus is applied to a UE. The apparatus includes an executing module. The executing module is configured to perform a first behaviour, where the first behaviour includes at least one of: random access, data transmission, cell selection, cell reselection, handover, RRC state transition, system information acquisition, synchronization, camping, paging, or paging response.

According to an eleventh aspect, a terminal device is provided. The terminal device includes a processor and a memory. The memory is configured to store computer programs. The processor is configured to invoke and run the computer programs stored in the memory, to perform the method according to any one of the second aspect described above, or to perform the method according to any of the fourth aspect described above, or to perform the method described above any of the fifth aspect described above.

According to a twelfth aspect, a network device is provided. The network device includes a processor and a memory. The memory is configured to store computer programs. The processor is configured to invoke and run the computer programs stored in the memory, to perform the method according to any one of the first aspect described above or to perform the method according to any one of the third aspect described above.

According to a thirteenth aspect, a chip is provided. The chip includes a processor. The processor is configured to invoke and run computer programs from a memory, to cause a device equipped with the chip to perform the method according to any one of the second aspect described above. or to cause a device equipped with the chip to perform the method according to any one of the fourth aspect described above, or to cause a device equipped with the chip to perform the method of any one of the fifth aspect described above.

According to a fourteenth aspect, a chip is provided. The chip includes a processor. The processor is configured to invoke and run computer programs from a memory, to cause a device equipped with the chip to perform the method according to any one of the first aspect described above, or to cause a device equipped with the chip to perform the method according to any one of the third aspects described above.

According to a fifteenth aspect, a computer-readable storage medium is provided. The computer-readable storage medium is configured to store computer programs which are operable with a computer to perform the method according to any one of the second aspect described above, or operable with a computer to perform the method according to any one of the fifth aspects described above, or operable with a computer to perform the method according to any of the fourth aspects described above.

According to a sixteenth aspect, a computer-readable storage medium is provided. The computer-readable storage medium is configured to store computer programs which are operable with a computer to perform the method according to any one of the first aspect described above, or operable with a computer to perform the method according to any one of the third aspect described above.

According to a seventeenth aspect, a computer program product is provided. The computer program product includes computer program instructions which are operable with a computer to perform the method according to any one of the second aspect described above, or operable with a computer to perform the method according to any one of the fourth aspect described above, or operable with a computer to perform the method operable with any one of the fifth aspect described above.

According to an eighteenth aspect, a computer program product is provided. The computer program product includes computer program instructions which are operable with a computer to perform the method according to any one of the first aspect described above, or operable with a computer to perform the method according to any one of the third aspect described above.

According to a nineteenth aspect, a computer program is provided. The computer program is operable with a computer to perform the method according to any one of the second aspect described above, or operable with a computer to perform the method according to any one of the fourth aspect described above, or operable with a computer to perform the method operable with any one of the fifth aspect described above.

According to a twentieth aspect, a computer program is provided, where the computer program is operable with a computer to perform the method according to any one of the first aspect described above, or operable with a computer to perform the method according to any one of the third aspect described above.

The wireless communication method and apparatus, the device, the storage medium, and the program product provided in embodiments of the disclosure are beneficial to research on energy saving of a network side.

### BRIEF DESCRIPTION OF THE DRAWINGS

To describe technical solutions in embodiments of the disclosure or in the related art more clearly, brief introduction of the accompanying drawings for describing the embodiments or the related art will be given below. Apparently, the accompanying drawings described below are merely embodiments of the disclosure. Based on the disclosed drawings, those of ordinary skill in the art can also obtain other drawings without creative effort.
FIG. 1 is a schematic diagram illustrating an implementation environment of a wireless communication method provided in an embodiment.
FIG. 2 is a schematic diagram of a wireless communication method provided in an embodiment.
FIG. 3 is a schematic diagram of a wireless communication method provided in an embodiment.
FIG. 4 is a block diagram of a communication device provided in an embodiment.
FIG. 5 is a block diagram of a communication device provided in an embodiment.
FIG. 6 is a block diagram of a chip provided in an embodiment.

### DETAILED DESCRIPTION

The following will describe technical solutions of embodiments of the disclosure clearly and completely with reference to the accompanying drawings in the embodiments of the disclosure. Apparently, the embodiments described below are merely some embodiments, rather than all embodiments, of the disclosure. Based on the embodiments of the disclosure, all other embodiments obtained by those of ordinary skill in the art without creative effort shall belong to the protection scope of the disclosure.

There is no limitation on the network standard of a wireless communication system involved in embodiments of the disclosure. For example, in embodiments of the disclosure, the wireless communication system may be a Long Term Evolution (LTE) system, an LTE frequency division duplex (FDD) system, an LTE time division duplex (FDD) system, a 5th-generation (5G) communication system, or future communication system, etc.

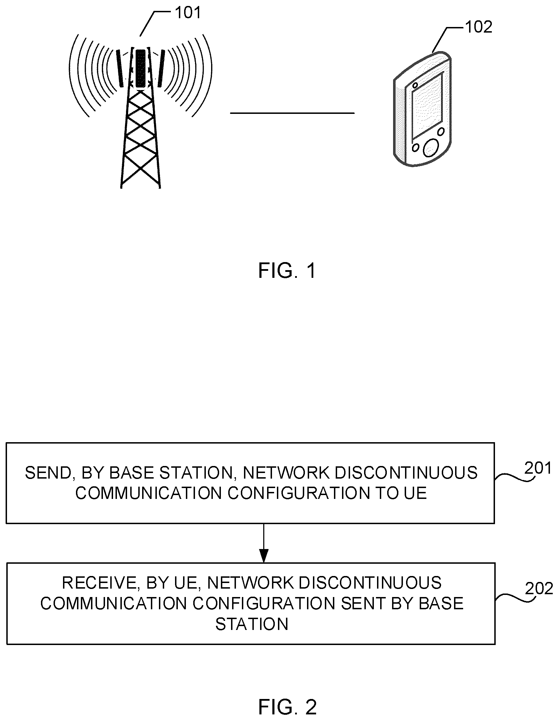

Referring to FIG. 1, FIG. 1 is a schematic architectural diagram of a wireless communication system according to embodiments of the disclosure. As illustrated in FIG. 1, the wireless communication system may include a base station 101 and a user equipment (UE) 102. It should be noted that, although only one UE 102 is illustrated in FIG. 1, it should be understood that there may be more than one UE 102.

The base station 101 may be a base station supporting a specific function, or a base station supporting a network energy saving (NES) mode, or a base station to which an NES technology is applied.

A cell corresponding to the base station 101 may be a cell supporting a specific function, or a cell supporting an NES mode, or a cell to which an NES technology is applied.

A frequency corresponding to the base station 101 may be a frequency supporting a specific function, or a frequency supporting an NES mode, or a frequency to which an NES technology is applied.

The UE 102 may be a UE supporting a specific function, or an NES-capable UE, or a UE supporting an NES technology, or a UE capable of supporting a specific function, or a UE capable supporting NES, or a UE supporting an NES mode. Such UE 102 can also be referred to as an NES UE.

The UE 102 may also be a UE that does not support a specific function, or a non-NES-capable UE, or a UE that does not support an NES technology, or a UE that is not capable of supporting a specific function, or a UE that is not capable of supporting NES, or a UE that does not support an NES mode. Such UE 102 can also be referred to as a conventional UE or a legacy UE.

It should be noted that, the wireless communication system can further include other network entities such as a network controller and a mobility management entity, which is not limited in embodiments of the present disclosure.

It should be noted that, FIG. 1 merely illustrates a wireless communication system to which the disclosure is applicable by way of example, and the method illustrated in embodiments of the disclosure may also be applicable to other wireless communication systems. It should be understood that, the terms "system" and "network" herein are usually used interchangeably throughout this disclosure. The term "and/or" herein only describes an association relationship between associated objects, which means that there can be three relationships. For example, A and/or B can mean A alone, both A and B exist, and B alone. In addition, the character "/" herein generally indicates that the associated objects are in an "or" relationship. It should be understood that, "indication" referred to in embodiments of the disclosure may be a direct indication, may be an indirect indication, or may mean that there is an association relationship. For example, A indicates B may mean that A directly indicates B, for instance, B can be obtained according to A; may mean that A indirectly indicates B, for instance, A indicates C, and B can be obtained according to C; or may mean that that there is an association relationship between A and B. In the elaboration of embodiments of the disclosure, the term "correspondence" may mean that there is a direct or indirect correspondence between the two, may mean that there is an association between the two, or may mean a relationship of indicating and indicated or configuring and configured, etc. In embodiments of the disclosure, the "pre-defined" can be implemented by pre-storing a corresponding code or table in a device (for example, including the UE and the base station) or in other manners that can be used for indicating related information, and the disclosure is not limited in this regard. For example, the "pre-defined" may mean defined in a protocol. In embodiments of the disclosure, the "protocol" may refer to a communication standard protocol, which may include, for example, an LTE protocol, an NR protocol, and a protocol applied to a future communication system, and the disclosure is not limited in this regard.

Referring to FIG. 2, FIG. 2 is a schematic diagram of a wireless communication method provided in embodiments of the disclosure. As illustrated in FIG. 2, the wireless communication method includes the following steps.

Step 201, a base station sends a network discontinuous communication configuration to a UE.

Discontinuous communication may include discontinuous reception (DRX), discontinuous transmission (DTX), and DRX and DTX.

Network discontinuous communication may include a network-side discontinuous communication behaviour, and may specifically include network-side DRX, network-side DTX, and network-side DRX and network-side DTX. The network side may include a base station and/or a cell. A base station capable of discontinuous communication may be a base station supporting a specific function, or a base station supporting a network energy saving (NES) mode, or a base station to which an NES technology is applied. A cell capable of discontinuous communication may be a cell supporting a specific function, or a cell supporting an NES mode, or a cell to which an NES technology is applied.

The network discontinuous communication configuration may include a configuration of network discontinuous communication for the cell and/or a configuration of network discontinuous communication for the base station.

Step 202, the UE receives the network discontinuous communication configuration sent by the base station.

In an optional embodiment of the disclosure, the UE may perform at least one of the following according to the network discontinuous communication configuration: 1. transmission and/or reception; 2. transmission; 3. reception.

In an optional embodiment of the disclosure, a configuration mode for the network discontinuous communication configuration includes at least one of the following:
1. The network discontinuous communication configuration is configured at a granularity of cell (that is, per cell), in other words, network discontinuous communication configurations for different cells may be different.
2. The network discontinuous communication configuration is configured at a granularity of base station (that is, per base station), in other words, network discontinuous communication configurations for different base stations may be different.
3. The network discontinuous communication configuration is configured at a granularity of media access control (MAC) entity (that is, per MAC entity), in other words, network discontinuous communication configurations for different MAC entities may be different.
4. The network discontinuous communication configuration is configured at a granularity of UE (that is, per UE), in other words, network discontinuous communication configurations for different UEs may be different.
5. The network discontinuous communication configuration is configured at a granularity of UE group (that is, per UE group), in other words, network discontinuous communication configurations for different UE groups may be different.

In an optional embodiment of the disclosure, the network discontinuous communication configuration includes one of:
1. network DRX configuration;
2. network DTX configuration;
3. network DRX configuration and network DTX configuration;
4. network DRX and DTX configuration.

The network DRX configuration includes a configuration parameter for network DRX. The network DTX configuration includes a configuration parameter for network DTX. The network DRX and DTX configuration includes a network discontinuous transmission/reception configuration, where discontinuous transmission/reception includes transmission and/or reception.

In an optional embodiment of the disclosure, the network DRX configuration and the network DTX configuration are carried in different messages, or the network DRX configuration and the network DTX configuration are carried in the same message.

In an optional embodiment of the disclosure, the network discontinuous communication configuration is carried in at least one of: a radio resource control (RRC) message, system information, or dynamic information. The dynamic information includes downlink control information (DCI) and/or a MAC control element (MAC CE). The RRC message includes a UE-specific RRC message or a UE-group RRC message.

In an optional embodiment of the disclosure, the base station may send one network discontinuous communication configuration to the UE, or may send multiple network discontinuous communication configurations to the UE.

In an optional embodiment of the disclosure, if the base station sends multiple network discontinuous communication configurations to the UE, the base station may further send a first configuration to the UE, where the first configuration includes at least one of:
1. an execution order or a pattern of the multiple network discontinuous communication configurations;
2. a default network discontinuous communication configuration in the multiple network discontinuous communication configurations.

In an optional embodiment of the disclosure, the network discontinuous communication configuration may be configured, adjusted, activated, and/or deactivated via one type of information, for example, may be configured, adjusted, activated, and/or deactivated via an RRC message, or may be configured, adjusted, activated, and/or deactivated via DCI.

In an optional embodiment of the disclosure, the network discontinuous communication configuration may be configured, adjusted, activated, and/or deactivated via multiple types of information, for example, may be configured via RRC and adjusted, activated, and/or deactivated via DCI.

In an optional embodiment of the disclosure, the base station may send dynamic indication information (such as DCI, a MAC CE, etc.) to the UE. The dynamic indication information is used for indicating at least one of: 1. indication of the network discontinuous communication configuration; 2. adjustment of the network discontinuous communication configuration; 3. indication of activation or deactivation of one or more network discontinuous communication configurations.

Specifically, the dynamic indication information may indicate at least one of:
1. the network discontinuous communication configuration;
2. adjustment information of the network discontinuous communication configuration;
3. an adjustment parameter of the network discontinuous communication configuration;
4. activation information of the network discontinuous communication configuration;
5. deactivation information of the network discontinuous communication configuration;
6. an enabling time, an enabling moment, a use duration, or a disabling moment of the network discontinuous communication configuration.

In an optional embodiment of the disclosure, the indication of the dynamic indication information may be always valid, or may be valid within a certain validity range. Optionally, the validity range of the dynamic indication information includes at least one of the following:
1. within a first duration;
2. within a first duration following reception of the dynamic indication information, or within a first duration corresponding to the dynamic indication information;
3. a specific base station, or a specific base station indicated;
4. a specific cell, or a specific cell indicated;
5. a specific area, or a specific area indicated;
6. a specific UE, or a specific UE indicated.

In an optional embodiment of the disclosure, a configuration mode for the validity range of the dynamic indication information may include at least one of the following: 1. pre-configured; 2. pre-defined; 3. indicated by layer 1 (L1)/layer 2 (L2) signaling; 4. carried in the dynamic indication information; 5. configured via an RRC message; 6. configured via system information.

In an optional embodiment of the disclosure, the network discontinuous communication configuration includes at least one of: a configuration index, a periodicity corresponding to the configuration, a start time of use of the configuration, a duration of an active (or "on") state of network discontinuous communication, a start time of the active state of network discontinuous communication, an end time of the active state of network discontinuous communication, a timer configuration corresponding to the active state of network discontinuous communication, a duration of a non-active (or "off") state of network discontinuous communication, a start time of the non-active state of network discontinuous communication, an end time of the non-active state of network discontinuous communication, a timer configuration corresponding to the non-active state of network discontinuous communication, a UE behaviour or a network-side behaviour corresponding to the active state of network discontinuous communication, indication information of the UE behaviour or indication information of the network-side behaviour corresponding to the active state of network discontinuous communication, a UE behaviour or a network-side behaviour corresponding to the non-active state of network discontinuous communication, indication information of the UE behaviour or indication information of the network-side behaviour corresponding to the non-active state of network discontinuous communication, or mode information.

Optionally, the mode information indicates a behaviour mode of the UE and/or a behaviour mode of a network side. The behaviour mode includes at least one of: transmission information involved, the type of information allowed for transmission, the type of information not allowed for transmission, the type of information allowed for transmission and the type of information not allowed for transmission, or a conflict handling mode.

Optionally, the UE behaviour or the network-side behaviour includes one of: the type of information allowed for transmission, the type of information not allowed for transmission, or the type of information allowed for transmission and the type of information not allowed for transmission.

In an optional embodiment of the disclosure, in a target case, if the cell satisfies a first condition, the base station may perform a first network behaviour, and the UE may perform a first UE behaviour. The target case includes at least one of: 1. multi-carrier coverage scenario; 2. multi-carrier configuration scenario; 3. dual connectivity (DC) scenario; 4. carrier aggregation (CA) scenario. The first condition includes at least one of the following: 1. the cell is transitioned to an NES state; 2. the cell is transitioned to a non-active state of network discontinuous communication. The first network behaviour includes at least one of the following: 1. indicating the UE to deactivate the cell; 2. indicating the UE to stop transmitting specific information; 3. stopping transmitting specific information. The first UE behaviour may include at least one of the following: 1. deactivating the cell; 2. deactivating the cell according to an indication from the base station; 3. stopping transmitting specific information according to an indication from the base station; 4. stopping transmitting specific information; 5. requesting the base station to deactivate the cell; 6. requesting the base station to stop transmitting specific information; 7. requesting the base station to stop transmitting specific information.

In an optional embodiment of the disclosure, in a target case, if the cell satisfies a second condition, the base station may perform a second network behaviour, and the UE may perform a second UE behaviour. As described above, the target case includes at least one of: 1. multi-carrier coverage scenario; 2. multi-carrier configuration scenario; 3. DC scenario; 4. CA scenario. The second condition includes at least one of the following: 1. the cell is transitioned to a non-NES state; 2. the cell is transitioned to an active state of network discontinuous communication. The second network behaviour includes at least one of the following: 1. indicating the UE to activate the cell; 2. indicating the UE to transmit specific information; 3. transmitting specific information. The second UE behaviour includes at least one of the following: 1. activating the cell; 2. activating the cell according to an indication from the base station; 3. transmitting specific information according to an indication from the base station; 4. transmitting specific information; 5. requesting the base station to activate the cell; 6. requesting the base station to transmit specific information; 7. requesting the base station to transmit specific information.

In an optional embodiment of the disclosure, considering that the UE can be configured to perform DRX, UE DRX needs to be aligned with network DTX, so as to ensure normal communication. Optionally:
1. If both network DTX and UE DRX are in an active state, the UE performs communication according to the network DTX configuration and/or a UE DRX configuration.
2. If network DTX is in an active state and UE DRX is in a non-active state, the UE performs communication according to the network DTX configuration or the UE DRX configuration.
3. If network DTX is in an active state, consider that UE DRX is in use or enabled, or communication can be performed according to UE DRX.
4. If network DTX is in a non-active state and UE DRX is in an active state, the UE performs communication according to the network DTX configuration, or considers that UE DRX is in a non-active state.
5. If both network DTX and UE DRX are in a non-active state, the UE performs communication according to the network DTX configuration and/or the UE DRX configuration, or considers that DRX of the UE is in a non-active state, where the UE DRX configuration includes a configuration parameter for DRX of the UE.

In an optional embodiment of the disclosure, optionally:
1. If the UE receives or uses a network discontinuous communication configuration for a MAC entity, the UE uses a UE discontinuous transmission/reception configuration for the MAC entity or performs a UE discontinuous transmission/reception behaviour for the MAC entity.
2. If the UE uses different network discontinuous communication configurations for different cells, for the UE or a MAC entity, the UE uses different UE discontinuous transmission/reception configurations, or uses the same UE discontinuous transmission/reception configuration, or uses an intersection of different UE discontinuous transmission/reception configurations, or uses a union of different discontinuous transmission/reception configurations, or performs the same UE discontinuous transmission/reception behaviour, or performs different UE discontinuous transmission/reception behaviours.
3. If the UE uses the same network discontinuous communication configuration for different cells, the UE uses the same UE discontinuous transmission/reception configuration for different cells or performs the same UE discontinuous transmission/reception behaviour for different cells, or uses the same UE discontinuous transmission/reception configuration for the UE or a MAC entity or performs the same UE discontinuous transmission/reception behaviour for the UE or the MAC entity, where the UE discontinuous transmission/reception configuration includes a DTX configuration and/or a DRX configuration, and the UE discontinuous transmission/reception behaviour includes UE DTX and/or DRX.

In an optional embodiment of the disclosure, if network discontinuous communication is in a non-active state, the UE stops performing an ongoing third UE behaviour, or stops performing a new third UE behaviour after the ongoing third UE behaviour is performed, where the third UE behaviour includes at least one of: random access, paging, or paging response.

Hereinafter, with regard to the network DRX configuration, another embodiment is further provided in embodiments of the disclosure.

The network configures to the UE a cell/gNB DRX/DTX configuration (the network discontinuous communication configuration described above), which may specifically include at least one of the following.

The cell/gNB DRX/DTX configuration may be at least one of: a cell/gNB DRX configuration, a cell/gNB DTX configuration, or a cell/gNB DRX+DTX configuration.

Optionally, the cell/gNB DRX+DTX configuration may be a cell/gNB DTX configuration together with a cell/gNB DRX configuration, or may be a cell/gNB unified configuration (the unified configuration means that DTX and DRX are not differentiated, and a corresponding UE or network behaviour includes uplink (UL) and downlink (DL)).

The cell/gNB DRX/DTX configuration corresponds to one configuration set or multiple configuration sets.

Optionally, if multiple sets are configured, the network may configure a usage order or patterns of the multiple sets. Further, the network may configure the usage order of the multiple sets and a periodicity, a start time, etc. of the pattern of each of the multiple sets.

Optionally, the network may indicate, via dynamic information such as DCI/MAC CE, which set is to be used or changed.

Optionally, the network configures one or more of the multiple sets as a default set(s).

Optionally, the UE uses the default set to perform transmission. Alternatively, the UE uses the default set at the time when or in a case that the network indicates to activate or use the default set (for example, based on a DCI/MAC CE indication or a start offset configured, or when an indication of enabling cell/gNB DRX/DTX is received or an indication of enabling default cell/gNB DRX/DTX is received).

At least one of the at least one configuration set includes at least one of: a set index, a periodicity corresponding to the set, or a start offset of the set.

At least one of the at least one configuration set includes at least one of: an active (on) state, a non-active (off) state, a duration of the active (on) state, a start time of the active (on) state, an end time of the active (on) state, a timer configuration corresponding to the active (on) state, a duration of the non-active (off) state, a start time of the non-active (off) state, an end time of the non-active (off) state, or a timer configuration corresponding to the non-active (off) state.

At least one of the at least one configuration set includes at least one of: a UE or network behaviour in an active (on) state, a UE or network behaviour in a non-active (off) state, an indication (such as index) of the UE or network behaviour in the active (on) state, or an indication (such as index) of the UE or network behaviour in the non-active (off) state.

For example, which example or example index of the UE or network (NW) behaviour is to be applied is indicated.

For example, which information is to be transmitted by the UE or the network, or which information cannot be transmitted by the UE or the network, is indicated. The information includes at least one of: a random access channel (RACH), a scheduling request (SR), a configured grant (CG), a semi-persistent scheduling (SPS), reference information, a sounding reference signal (SRS), a channel state information-reference signal (CSI-RS), a synchronization signal block (SSB), a system information block (SIB), or a dynamic grant (DG).

For example:
Example 1: UE or gNB is expected to turn off all transmission and reception for data traffic and reference signal during cell DTX/DRX non-active periods.
Example 2: UE or gNB is expected to turn off its transmission/reception only for data traffic during cell DTX/DRX non-active periods (i.e., UE or gNB will still transmit/receive reference signals)
Example 3: UE or gNB is expected to turn off its dynamic data transmission/reception during cell DTX/DRX non-active periods (i.e., UE or gNB is expected to still perform transmission/reception in periodic resources, including SPS, CG-physical uplink shared channel (CG-PUSCH), SR, RACH, and SRS).
Example 4: UE or gNB is expected to only transmit reference signals (e.g., CSI-RS for measurement).
Example 5: UE or gNB is expected to turn off any transmission and reception during cell DTX/DRX non-active periods.

In a configuration mode, cell DTX/DRX pattern contains the start offset and the duration of active/non-active mode. Additionally, for periodic cell DTX/DRX patterns, RRC signalling can also include the periodicity of the cell DTX/DRX pattern and/or the index of the Cell DTX/DRX pattern.

In another configuration mode, periodic cell DTX/DRX pattern in RRC contains periodicity of the cell DTX/DRX pattern, the start offset and the duration of active/non-active mode. Additionally, if multiple cell DTX/DRX patterns are supported in RRC, RRC also indicates the index of the cell DTX/DRX pattern. Additionally or alternatively, cell DTX/DRX pattern in L1/L2 signalling contains the start offset and the duration of non-active mode.

At least one of the at least one configuration set is configured per cell, or configured per UE, or configured per MAC entity.

Optionally, a UE behaviour corresponding to cell DTX overrides a UE behaviour corresponding to UE DRX, that is, a cell DTX non-active period corresponds to an inactive time of the UE (for example, in case the UE DRX is configured, if cell DTX is off, then the UE is in a DRX off state, or the UE operates according to the DRX off state, or the UE considers that cell DTX is off and performs transmission according to requirements of cell DTX off (regardless of UE DRX configuration)). Optionally, a UE DRX active time can be enabled only in a cell DTX active period, or the UE can or is possible to take into consideration UE DRX active or operate according to UE DRX active only in the cell DTX active period.

In an implementation, in the case that cell DTX/DRX is configured/enabled, radio access network 2 (RAN2) assumes that the UE behaviour is aligned with gNB expected cell DTX/DRX behaviour, i.e. cell DTX non-active period will be always the inactive time for UE (in case the UE DRX is configured) and UE DRX active time is only possible in the cell DTX active period.

Optionally, in the case of CA or DC, if a cell is transitioned to an NES state or a DRX/DTX off state, then the network deactivates the cell, or the UE deactivates/suspends the cell according to NES information of the cell. Accordingly, information transmission is stopped or suspended (or only corresponding transmission in the example is stopped).

Optionally, in case of CA or DC, if a cell is transitioned to a non-NES state or a DRX/DTX on state, then the network activates the cell, or the UE activates/resumes the cell according to NES information of the cell. Accordingly, information transmission is resumed.

Optionally, the base station may configure the UE DRX configuration.

Optionally, if at least one of the at least one configuration set is configured per cell, the UE DRX configuration or the UE DRX behaviour is per cell.

Optionally, if at least one of the at least one configuration set is configured per MAC entity, the UE DRX configuration or the UE DRX behaviour is per MAC entity.

Optionally, if at least one of the at least one configuration set is configured per cell entity, the UE DRX configuration or the UE DRX behaviour is per MAC entity.

Optionally, if at least one of the at least one configuration set is in an active state and UE DRX is in an on state, the UE follows the cell/gNB DRX/DTX configuration, and follows the UE DRX configuration, that is, the UE performs transmission normally. Optionally, the UE maintains a DRX timer, where the timer includes an inactivity timer, a hybrid automatic repeat request-round trip time (HARQ RTT) timer, and a retransmission timer (which can distinguish between UL and DL).

Optionally, if at least one of the at least one configuration set is in an active state and UE DRX is in an off state, the UE follows the cell/gNB DRX/DTX configuration (normal transmission), or the UE follows the UE DRX configuration (physical downlink control channel (PDCCH) monitoring and/or DG transmission cannot be performed). Optionally, the UE maintains a DRX timer, where the timer includes an inactivity timer, a HARQ RTT timer, and a retransmission timer (which can distinguish between UL and DL); or the UE uses a short DRX cycle.

Optionally, if at least one of the at least one configuration set is in a non-active state and UE DRX is in an on state, the UE follows the cell/gNB DRX/DTX configuration (transmission is performed according to requirements of a cell DRX/DRX state). Optionally, the UE does not maintain (or stops or suspends) a DRX timer, where the timer includes an inactivity timer, a HARQ RTT timer, and a retransmission timer (which can distinguish between UL and DL); or the UE uses a long DRX cycle.

Optionally, if at least one of the at least one configuration set is in a non-active state and the UE DRX is in an off state, the UE follows the cell/gNB DRX/DTX configuration (transmission is performed according to requirements of a cell DRX/DRX state), and/or the UE follows the UE DRX configuration (PDCCH monitoring and/or DG transmission cannot be performed). Optionally, the UE does not maintain (or stops or suspends) a DRX timer, where the timer includes an inactivity timer, a HARQ RTT timer, and a retransmission timer (which can distinguish between UL and DL); or the UE uses a long DRX cycle.

Optionally, the cell/gNB DRX configuration and the cell/gNB DTX configuration can be configured independently or configured separately.

Optionally, in the case that the cell/gNB DRX configuration and the cell/gNB DTX configuration can be configured independently, if DCI or MAC CE is needed for activation or deactivation of the configuration, activation or deactivation information can be specific to each of the cell/gNB DRX configuration and the cell/gNB DTX, or can be common to the cell/gNB DRX configuration and the cell/gNB DTX.

The network configures the cell/gNB DRX/DTX configuration via an RRC message, where the RRC message may be UE-specific RRC, UE group RRC, system information, or an SIB message.

The network configures or indicates the cell/gNB DRX/DTX configuration, where the configuration is a cell/gNB DRX/DTX mode.

For a certain mode, the UE performs a behaviour, such as transmission or reception, or collision handling, corresponding to the mode according to pre-defined information.

Optionally, the network may configure to the UE the cell/gNB DRX/DTX configuration via DCI or MAC CE, or adjust the configured cell/gNB DRX/DTX configuration configured via RRC, or activate the configured cell/gNB DRX/DTX configuration, or activate or deactivate a specific configured cell/gNB DRX/DTX configuration.

For example, one set of cell/gNB DRX/DTX is configured via RRC, and another set of cell/gNB DRX/DTX is indicated by DCI or MAC CE. Accordingly, the UE follows the cell/gNB DRX/DTX indicated by the DCI/MAC CE. Alternatively, in a specific case, the UE follows the cell/gNB DRX/DTX indicated by the DCI/MAC CE (optionally, in other cases, the UE follows the cell/gNB DRX/DTX configured via RRC). Optionally, the specific case is within a first duration. Optionally, the first duration is pre-defined or indicated by RRC/DCI/MAC CE, and the first duration is started from when the cell/gNB DRX/DTX indicated by the DCI/MAC CE is received by the UE. The first duration may be a first timer. Optionally, the specific case includes a cell or base station corresponding to the cell/gNB DRX/DTX indicated by the DCI/MAC CE.

For example, one set of cell/gNB DRX/DTX is configured via RRC, and DCI or MAC CE indicates adjustment of a cell/gNB DRX/DTX parameter configured via RRC. Optionally, the DCI indicates an adjustment parameter and/or an adjustment value. Accordingly, the UE follows DCI/MAC CE indication information to adjust the cell/gNB DRX/DTX. Alternatively, in a specific case, the UE follows DCI/MAC CE indicated adjustment of the cell/gNB DRX/DTX (optionally, in other cases, the UE follows the cell/gNB DRX/DTX parameter configured via RRC). Optionally, the specific case is within a first duration. Optionally, the first duration is pre-defined or indicated by RRC/DCI/MAC CE. The first duration is started from when the cell/gNB DRX/DTX indicated by the DCI/MAC CE is received by the UE. The first duration may be a first timer. Optionally, the specific case includes a cell or base station corresponding to the cell/gNB DRX/DTX indicated by the DCI/MAC CE.

For example, one set of cell/gNB DRX/DTX is configured via RRC, and DCI or a MAC CE indicates activation or deactivation of the cell/gNB DRX/DTX configured via RRC. The UE activates or deactivates the cell/gNB DRX/DTX if the DCI/MAC CE is received. Optionally, the DCI/MAC CE indicates a set ID of cell/gNB DRX/DTX that is to be activated or deactivated. Optionally, the UE follows DCI/MAC CE indication information to activate or deactivate the cell/gNB DRX/DTX. Alternatively, in a specific case, the UE follows DCI/MAC CE indicated activation or deactivation of the cell/gNB DRX/DTX (optionally, in other cases, it is considered that the cell/gNB DRX/DTX is configured but is not activated). Optionally, the specific case is within a first duration. Optionally, the first duration is pre-defined or indicated by RRC/DCI/MAC CE. The first duration is started from when the cell/gNB DRX/DTX indicated by the DCI/MAC CE is received by the UE. The first duration may be a first timer. Optionally, the specific case includes a cell or base station corresponding to the cell/gNB DRX/DTX indicated by the DCI/MAC CE.

For example, multiple sets of cell/gNB DRX/DTX are configured via RRC, where each set of cell/gNB DRX/DTX corresponds to one set ID, and DCI or MAC CE indicates which set in the multiple sets of cell/gNB DRX/DTX configured via RRC is to be activated or deactivated. Optionally, the DCI/MAC CE indicates a set ID of the cell/gNB DRX/DTX that is to be activated or deactivated. Optionally, the UE follows DCI/MAC CE indication information to activate or deactivate the cell/gNB DRX/DTX. Alternatively, in a specific case, the UE follows DCI/MAC CE indicated activation or deactivation of the cell/gNB DRX/DTX (optionally, in other cases, it is considered that the cell/gNB DRX/DTX is configured but is not activated). Optionally, the specific case is within a first duration. Optionally, the first duration is pre-defined or indicated by RRC/DCI/MAC CE. The first duration is started from when the cell/gNB DRX/DTX indicated by the DCI/MAC CE is received by the UE. The first duration may be a first timer. Optionally, the specific case includes a cell or base station corresponding to the cell/gNB DRX/DTX indicated by the DCI/MAC CE.

In an implementation, if cell DTX/DRX pattern is aperiodic, or the gNB just would like to have a one-shot pattern, or the gNB wants to temporally adapt the DRX/DTX pattern, the gNB can indicate cell DTX/DRX pattern by dynamic signalling. Such cell DTX/DRX pattern indicated by L1/L2 signalling may indicate the time that the UE enters the cell DTX/DRX non-active mode and how long the UEs kept in that non-active mode. Otherwise, if it is a periodic cell DTX/DRX pattern, it is natural that gNB configures cell DTX/DRX pattern via RRC reconfiguration. Such cell DTX/DRX pattern indicated by RRC may contain the cell DTX/DRX periodicity, the start offset and the duration of active/non-active mode.

In another implementation, the gNB may use RRC signalling to configure the UEs with multiple cell DTX/DRX configurations for different network power states respectively and then activate one of them by using L1/L2 signalling (L1/L2 signalling needs to include cell DTX/DRX configuration index to be activated). As a result, the UE can use the activated cell DTX/DRX configuration for transmission/reception.

The UE performs related behaviour according to the cell/gNB DRX/DTX configuration indicated or configured by the network.

Optionally, a legacy UE cannot access a cell with cell DRX/DTX or perform information transmission in the cell with cell DRX/DTX. Alternatively, whether the legacy UE can access the cell with cell DRX/DTX or perform information transmission in the cell with cell DRX/DTX is up to NW implementation. Alternatively, if a behaviour required by cell DTX is the same as that required by UE DRX, the legacy UE can access the cell with cell DRX/DTX or perform information transmission in the cell with cell DRX/DTX.

Optionally, based on the configuration, if cell DTX/DRX is non-active, a RACH that is being performed by the UE will be stopped, or paging/paging will be stopped accordingly.

In another implementation (including at least one of the following):
RAN2 allows multiple sets of cell DTX/DRX configurations in RRC signalling.
RAN2 confirms both alternatives below can be considered for cell DTX/DRX configuration indication.
   - Alt1: Allow both periodic pattern (configured by RRC) and one-shot pattern (configured by L1/L2 signalling).
   - Alt2: Allow multiple periodic patterns configured by RRC and one of them is activated by L1/L2 signalling.

Periodic cell DTX/DRX pattern in RRC configuration includes periodicity, the start offset and the duration of active/non-active mode. Additionally, if multiple cell DTX/DRX patterns are supported, the index of the cell DTX/DRX pattern is also indicated in the RRC configuration.

Cell DTX/DRX pattern in L1/L2 signalling includes the start offset and the duration of non-active mode. Or for Alt1, cell DTX/DRX pattern in L1/L2 signalling includes the start offset and the duration of non-active mode.

RAN2 clarifies whether Example 1 covers no transmission of SIB and SSB.

In the case that cell DTX/DRX is configured/enabled, RAN2 assumes that the UE behaviour is aligned with gNB expected Cell DTX/DRX behaviour, i.e. cell DTX non-active period will be always the inactive time for UE (in case the UE DRX is configured) and UE DRX active time is only possible in the cell DTX active period.

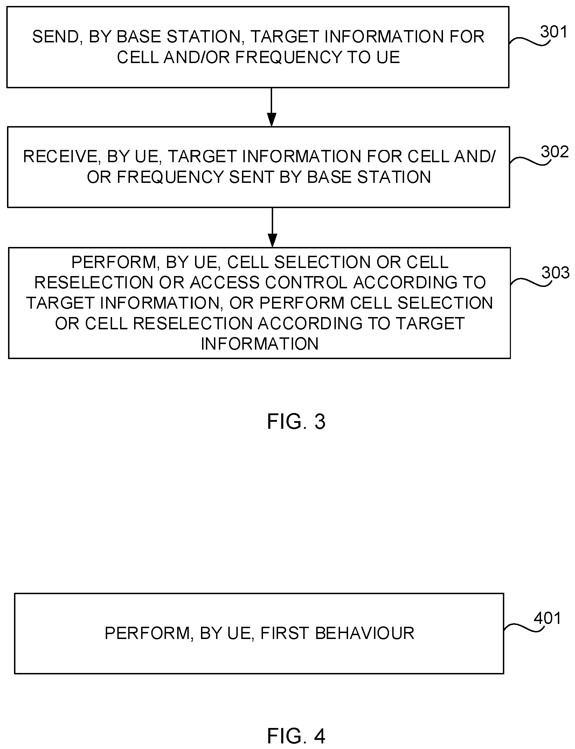

Referring to FIG. 3, FIG. 3 is a schematic diagram of a wireless communication method provided in embodiments of the disclosure. As illustrated in FIG. 3, the wireless communication method includes the following steps.

Step 301, a base station sends target information for a cell and/or a frequency to a UE.

The target information indicates to the UE to perform cell selection or cell reselection or access control. Alternatively, the target information indicates to the UE to perform cell selection or cell reselection.

Step 302, the UE receives the target information for the cell and/or the frequency sent by the base station.

Step 303, the UE performs cell selection or cell reselection or access control according to the target information, or the UE performs cell selection or cell reselection according to the target information.

Optionally, the target information may be intended for a target cell and/or a target frequency.

In an optional embodiment of the disclosure, the target information is carried in at least one of: an RRC message, system information, an SIB message, or a master information block (MIB) message.

In an optional embodiment of the disclosure, if the target information is carried in system information, an MIB, and/or an SIB, the target information includes at least one of: a cell selection parameter for a candidate cell or a cell to be camped on or a cell to be selected, a cell reselection parameter for a candidate cell or a cell to be camped on or a cell to be selected, a cell measurement parameter for a candidate cell or a cell to be camped on or a cell to be selected, a cell selection parameter for a cell at a candidate frequency or a frequency to be camped on or a frequency to be selected, a cell reselection parameter for a cell at a candidate frequency or a frequency to be camped on or a frequency to be selected, a cell measurement parameter for a cell at a candidate frequency or a frequency to be camped on or a frequency to be selected, a cell selection parameter for the target cell, a cell reselection parameter for the target cell, a cell measurement parameter for the target cell, a cell selection parameter for the target frequency, a cell reselection parameter for the target frequency, a cell measurement parameter for the target frequency, a measurement parameter for the target frequency, a selection or reselection parameter for the target frequency, a priority of the target frequency, a cell selection parameter for another inter-frequency cell, a cell reselection parameter for another inter-frequency cell, a cell measurement parameter for another inter-frequency cell, a cell selection parameter for another intra-frequency cell, a cell reselection parameter for another intra-frequency cell, a cell measurement parameter for another intra-frequency cell, a frequency list, a frequency priority, a cell-level measurement parameter, a parameter corresponding to S criteria, a parameter corresponding to R criteria, a unified access control (UAC) parameter, a parameter that is used for determining a frequency priority in inter-frequency selection, a list of cells that are allowed for access, a list of cells that are barred for access, a cell selection parameter for a neighbour-frequency cell, a cell reselection parameter for a neighbour-frequency cell, a cell selection parameter for a neighbour frequency, or a cell reselection parameter for a neighbour frequency.

In an optional embodiment of the disclosure, the target cell may be a cell supporting a specific function, or a cell supporting an NES mode, or a cell to which an NES technology is applied. The target frequency may be a frequency supporting a specific function, or a frequency supporting an NES mode, or a frequency to which an NES technology is applied.

In an optional embodiment of the disclosure, the target information indicates to the UE to perform cell selection or cell reselection or access control according to the target information and capability information of the UE, or the target information indicates to the UE to perform cell selection or cell reselection according to the target information and the capability information of the UE. The capability information indicates whether the UE supports a specific function, or whether the UE has an NES capability, or whether the UE supports an NES technology, or whether the UE is capable of supporting a specific function, or whether the UE is capable of supporting NES, or whether the UE supports an NES mode.

In an optional embodiment of the disclosure, the cell and/or the frequency is available for a first-type UE and a second-type UE to access, select, or reselect. Alternatively, the cell and/or the frequency is allowed for the first-type UE and the second-type UE to access, select or reselect. Alternatively, the cell and/or the frequency is available only for the first-type UE to access, select, or reselect. Alternatively, the cell and/or the frequency is allowed only for the first-type UE to access, select, or reselect. Alternatively, the target cell or the target frequency is available for the first-type UE and the second-type UE to access, select, or reselect. Alternatively, the target cell or the target frequency is allowed for the first-type UE and the second-type UE to access, select, or reselect. Alternatively, the target cell or the target frequency is available only for the first-type UE to access, select, or reselect. Alternatively, the target cell or the target frequency is allowed only for the first-type UE to access, select, or reselect.

The first-type UE is a UE supporting a specific function, or an NES-capable UE, or a UE supporting an NES technology, or a UE capable of supporting a specific function, or a UE capable of supporting NES, or a UE supporting an NES mode, or a specific-version UE. The second-type UE is a UE that does not support a specific function, or a non-NES-capable UE, or a UE that does not support an NES technology, or a UE not capable of supporting a specific function, or a UE not capable of supporting NES, or a UE that does not support an NES mode, a non specific-version UE, or an existing UE type.

If "the target cell or the target frequency is available for the first-type UE and the second-type UE to access, select, or reselect, or the target cell or the target frequency is allowed for the first-type UE and the second-type UE to access, select, or reselect, or the cell and/or the frequency is available for the first-type UE and the second-type UE to access, select, or reselect, or the cell and/or the frequency is allowed for the first-type UE and the second-type UE to access, select, or reselect", the target information indicates to the first-type UE and the second-type UE to perform different cell selection procedures or cell reselection procedures or access control procedures, or indicates to the first-type UE and the second-type UE to apply different cell selection rules or cell reselection rules or access control rules, or indicates to the first-type UE and the second-type UE to use different cell selection configurations or cell reselection configurations or access control configurations, or the target information is used for the first-type UE and the second-type UE to perform different cell selection procedures or cell reselection procedures or access control procedures, or is used for the first-type UE and the second-type UE to apply different cell selection rules or cell reselection rules or access control rules, or is used for the first-type UE and the second-type UE to use different cell selection configurations or cell reselection configurations or access control configurations.

With regard to a UE that has received the target information, the UE can perform a corresponding cell selection procedure or cell reselection procedure or access control procedure according to an indication of the target information or according to the target information. Alternatively, the UE can apply a corresponding cell selection rule or cell reselection rule or access control rule according to the indication of the target information or according to the target information. Alternatively, the UE can use a corresponding cell selection configuration or cell reselection configuration or access control configuration according to the indication of the target information or according to the target information.

With regard to a UE that has received the target information, optionally, based on the capability information of the UE, or a function supported by the UE, or the type of the UE, or version information of the UE, or whether the UE belongs to the first-type UE or the second-type UE, the UE can perform a corresponding cell selection procedure or cell reselection procedure or access control procedure according to the indication of the target information or according to the target information, or the UE can apply a corresponding cell selection rule or cell reselection rule or access control rule according to the indication of the target information or according to the target information, or the UE can use a corresponding cell selection configuration or cell reselection configuration or access control configuration according to the indication of the target information or according to the target information.

Optionally, according to the capability of the UE, or the function supported by the UE, or the type of the UE, or the version information of the UE, the UE determines whether the UE belongs to the first-type UE or the second-type UE, and/or determines which selection/reselection/access control mode is to be applied. It should be noted that, the elaborations herein are merely illustrative, and are not intended for imposing limitation on other implementations.

Further, in an optional embodiment of the disclosure, the target information can include two different sets of configurations or parameters, and the two different sets of configurations or parameters are used separately for the first-type UE and the second-type UE to perform cell selection or cell reselection or access control.

For a UE that has received the target information, the UE can select a corresponding configuration or parameter from the two different sets of configurations or parameters in the target information, to perform cell selection or cell reselection or access control according to the selected configuration or parameter.

For a UE that has received the target information, optionally, based on capability information of the UE, or a function supported by the UE, or the type of the UE, or version information of the UE, or whether the UE belongs to the first-type UE or the second-type UE, the UE can determine whether the UE is the first-type UE or the second-type UE. Then, the UE can select a corresponding configuration or parameter from the two different sets of configurations or parameters in the target information, to perform cell selection or cell reselection or access control according to the selected configuration or parameter.

Optionally, based on the capability of the UE, or the function supported by the UE, or the type of the UE, or the version information of the UE, the UE determines whether the UE belongs to the first-type UE or the second-type UE, and/or determines which selection/reselection/access control mode is to be applied. It should be noted that, the elaborations herein are merely illustrative, and are not intended for imposing limitation on other implementations.

Further, in an optional embodiment of the disclosure, the target information includes one set of cell-related configurations and/or adjustment indication information. The set of cell-related configurations is used for the UE to perform cell selection or cell reselection or access control. The adjustment indication information indicates to the UE to adjust, according to the adjustment indication information, some or all parameters, priorities of some or all frequencies, priorities of some or all cells, a configuration for a cell and/or a frequency, or a parameter for a cell and/or a frequency in the set of cell-related configurations.

According to content or indication of the adjustment indication information, some or all parameters, priorities of some or all frequencies, priorities of some or all cells, a configuration for a cell and/or a frequency, or a parameter for a cell and/or a frequency in the set of cell-related configurations can be adjusted. Optionally, the adjustment indication information is specific to the first-type UE, or specific to the second-type UE, or specific to both the first-type UE and the second-type UE. Optionally, based on this, the first-type UE and the second-type UE perform different adjustments, and/or different selection/reselection/access control configurations, and/or different selection/reselection/access control rules, and/or different selection/reselection/access control modes. Optionally, the adjustment indication information or the content of the adjustment indication information or the indication of the adjustment indication information for the first-type UE may be different from that for the second-type UE.

Further, in an optional embodiment of the disclosure, the target information includes one set of frequency-related configurations and/or adjustment indication information. The set of frequency-related configuration is used for the UE to perform cell selection or cell reselection or access control. The adjustment indication information indicates to the UE to adjust, according to the adjustment indication information, some or all parameters, priorities of some or all frequencies, a configuration for a cell and/or a frequency, or a parameter for a cell and/or a frequency in the set of frequency-related configurations.

Likewise, according to content or indication of the adjustment indication information, some or all parameters, priorities of some or all frequencies, a configuration for a cell and/or a frequency, or a parameter for a cell and/or a frequency in the set of frequency-related configurations can be adjusted. Optionally, the adjustment indication information is specific to the first-type UE, or specific to the second-type UE, or specific to both the first-type UE and the second-type UE. Optionally, based on this, the first-type UE and the second-type UE perform different adjustments, and/or different selection/reselection/access control configurations, and/or different selection/reselection/access control rules, and/or different selection/reselection/access control modes. Optionally, the adjustment indication information or the content of the adjustment indication information or the indication of the adjustment indication information for the first-type UE may be different from that for the second-type UE.

Further, in an optional embodiment of the disclosure, the target information includes one set of cell-related configurations and/or a cell identity (ID). The set of cell-related configurations is used for the UE to perform cell selection or cell reselection or access control. The cell ID indicates at least one of: whether the target cell is a cell supporting a specific function, or a cell supporting an NES mode, or a cell to which an NES technology is applied; whether the UE is to adjust, based on the cell ID, a parameter used for cell selection or cell reselection or access control; an adjustment mode or adjustment amount of a configuration for a cell and/or a frequency; an adjustment mode or adjustment amount of a parameter for a cell and/or a frequency; priorities of some or all frequencies; or priorities of some or all cells.

Further, in an optional embodiment of the disclosure, the target information includes one set of frequency-related configurations and/or a frequency ID. The set of frequency-related configurations is used for the UE to perform cell selection or cell reselection or access control. The frequency ID indicates at least one of: whether the target cell is a cell supporting a specific function, or a cell supporting an NES mode, or a cell to which an NES technology is applied; whether the UE is to adjust, based on the frequency ID, a parameter used for cell selection or cell reselection or access control; an adjustment mode or adjustment amount of a configuration for a cell and/or a frequency; an adjustment mode or adjustment amount of a parameter for a cell and/or a frequency; priorities of some or all frequencies; or priorities of some or all cells.

With regard to the first-type UE and the second-type UE, behaviours performed by the first-type UE and the second-type UE, and/or information obtained by the first-type UE and the second-type UE, and/or configuration rounding used by the first-type UE and the second-type UE, and/or configuration information used by the first-type UE and the second-type UE, and/or configuration parameters used by the first-type UE and the second-type UE according to the cell ID or the frequency ID, may be different. Additionally or alternatively, with regard to the first-type UE and the second-type UE, the first-type UE and the second-type UE can perform different behaviours and/or obtain different information and/or use different configuration rounding and/or use different configuration information and/or use different configuration parameters based on a communication protocol as well as the cell ID or the frequency ID.

In an optional embodiment of the disclosure, based on the above elaborations, a parameter adjustment value or adjustment threshold is at least one of: pre-defined, pre-configured, stored at the UE, indicated by RRC, indicated by dedicated information, carried in RRC release, or indicated by system information.

If "the cell and/or the frequency is available only for the first-type UE to access, select, or reselect; or the cell and/or the frequency is allowed only for the first-type UE to access, select, or reselect; or the target cell or the target frequency is available only for the first-type UE to access, select, or reselect, or the target cell or the target frequency is allowed only for the first-type UE to access, select, or reselect", optionally, the base station may send first indication information and/or second indication information to the UE, where the first indication information is used for barring the second-type UE from accessing or selecting or reselecting the target cell or the target frequency, and the second indication information is used for allowing the first-type UE to access or select or reselect the target cell or the target frequency.

Further, the target information includes a first configuration or parameter. The first configuration or parameter indicates a cell selection parameter or a cell reselection parameter or an access control parameter corresponding to the first-type UE. Alternatively, the first configuration or parameter is used for cell selection or cell reselection or access control corresponding to the first-type UE.

That is, in this case, the target information is sent specifically for the first-type UE.

In an optional embodiment of the disclosure, all the first-type UEs perform the same cell selection or reselection or access control procedure, or all the first-type UEs apply the same cell selection or reselection or access control rule, or all the first-type UEs use the same cell selection or reselection or access control configuration.

In an optional embodiment of the disclosure, the first indication information is carried in a cell bar field in an MIB, or the first indication information is carried in a reserved field in an SIB, or the first indication information is carried in a list of cells/frequencies allowed for access in an SIB, or the first indication information is carried in a list of cells/frequencies barred for access in the SIB. The second indication information is carried in an SIB.

Hereinafter, with regard to cell selection/cell reselection/access control related to the NES technology, another embodiment is further provided in embodiments of the disclosure.

The network configures or indicates the target information. Optionally, the target information is used for the UE to perform cell selection or reselection. Specifically, the target information includes at least one of the following.

The target information includes information of a frequency and/or a cell, such as a frequency priority, a frequency list, a cell-level parameter corresponding to the cell selection (S) criteria, a parameter for inter-frequency priority selection, a cell-level parameter corresponding to the cell reselection (R) criteria, a parameter corresponding to UAC, and a cell measurement-related parameter.

Optionally, the following parameters may be taken as examples, but are not intended to exclude other parameters. For example, inter-frequency cell reselection criteria thresholds (e.g. NES offset applied to ThreshX, HighP, ThreshServing, LowP, ThreshX, LowP in clause 5.2.4.5 of TS 38.304). For another example, offset for cell ranking criteria R (e.g. Qoffset in clause 5.2.4.6 of TS 38.304). For another example, dedicated offset for its measurements (e.g. RSRP, RSRQ, Qhyst).

Based on the target information, the UE dynamically adjusts a cell selection or reselection parameter, or configuration information.

The network indicates or configures multiple sets of cell selection or reselection parameters, where one set of parameters is specific to an NES cell or a specific UE, while another one set is specific to other UEs, such as a legacy UE.

The target information includes at least one of: whether the base station or the cell is an NES cell, or configuring or indicating whether the base station or the cell is in an NES state, or configuring or indicating an NES-specific cell selection or reselection parameter, or configuring or indicating to the UE to use an NES-specific cell selection or reselection parameter, or using an NES-specific cell selection or reselection parameter/mechanism based on NES information.

The target information is carried in an SIB or a dedicated RRC message (such as *RRCrelease)*

If the target information is carried in both the SIB and the dedicated RRC message, the UE follows the dedicated RRC message, or follows the dedicated RRC message in a first case (for example, a cell that the UE camps on is an NES cell within a first duration).

The target information indicates to the UE to prioritize or down-prioritize, or select or not to select an NES cell or a cell that is in an NES state. Alternatively, the target information indicates to the UE to prioritize or down-prioritize, or to select or not to select an NES frequency or a frequency that is in an NES state.

The UE is a specific UE, for example, an NES-capable UE, or a UE supporting NES, or a UE supporting an NES-specific parameter.

The target information indicates that the base station or the cell is an NES cell or is in an NES state. Accordingly, according to the target information, the UE adjusts or uses an NES-specific cell selection and reselection parameter, or prioritizes or down-prioritizes the NES cell.

For example, if the S or R criteria is implemented, the UE excludes or prioritizes an NES cell or a cell in an NES state.

For example, if the S or R criteria is implemented, the UE excludes or prioritizes an NES cell or a cell in an NES state according to an indication of prioritizing or down-prioritizing NES indicated by the network.

For example, if the S or R criteria is implemented, the UE uses a cell selection or reselection parameter for an NES cell or a cell in an NES state, or performs offset adjustment based on an existing cell selection or reselection parameter. Optionally, the cell selection or reselection parameter or the offset is pre-defined, or indicated by the network, or stored at the UE.

For example, if the S or R criteria is implemented, according to an indication of prioritizing or down-prioritizing NES indicated by the network, the UE uses a cell selection or reselection parameter for an NES cell or a cell in an NES state, or performs offset adjustment based on an existing cell selection or reselection parameter. Optionally, the cell selection or reselection parameter or the offset is pre-defined, or indicated by the network, or stored at the UE.

For example, according to the target information, the UE adjusts an NES cell or an NES frequency to be a high-priority frequency.

For example, according to the target information, the UE adjusts an NES cell or an NES frequency to be a high-priority frequency based on an indication of prioritizing NES indicated by the network.

For example, according to the target information, the UE adjusts an NES cell or an NES frequency to be a low-priority frequency.

For example, according to the target information, a UE adjusts an NES cell or an NES frequency to be a high-priority frequency according to an indication of down-prioritizing NES indicated by the network.

The target information includes an intra-/inter-frequency excluded cell list. The target information is specific to a specific UE. The specific UE uses an intra-/inter-frequency excluded cell list corresponding to the target information. Optionally, a legacy UE uses an existing intra-/inter-frequency excluded cell list (i. e. the network configures or indicates multiple sets of intra-/inter-frequency excluded cell lists, where one set is applied to the legacy UE, while another one set is applied to the specific UE).

The target information includes a frequency priority, where the frequency priority is specific to an NES frequency or cell. The NES UE performs cell selection or reselection based on the target information. Optionally, the target information is carried in an SIB or dedicated RRC information (such as *RRCrelease).*

The target information includes a cell-specific parameter, where the cell-specific parameter is specific to an NES frequency or cell. Optionally, the cell-specific parameter is applied to the S criteria or R criteria, or is at least one parameter in cell-level parameters used in the corresponding S criteria or R criteria. The NES UE performs cell selection or reselection based on the target information. Optionally, the target information is carried in an SIB or dedicated RRC information (such as *RRCrelease).*

The target information includes an ID or a physical cell identity (PCI)-range of a cell allowed and/or not allowed for access, where the ID or the PCI-range of the cell allowed and/or not allowed for access corresponds to an NES frequency or cell. Optionally, the ID or the PCI-range of the cell allowed and/or not allowed for access is applied to the S criteria or R criteria. Optionally, the NES UE performs cell selection or reselection based on the target information. Optionally, the target information is carried in an SIB or dedicated RRC information (such as *RRCrelease).*

The target information for an intra-frequency or frequency includes an ID of an NES frequency or a frequency that is in an NES state. Accordingly, the UE adjusts the priority (to be high or low) of a corresponding frequency according to the target information and/or an indication of prioritizing or down-prioritizing NES indicated by the network.

The target information includes an ID of an NES cell or a cell that is in an NES state. Accordingly, the UE adjusts the priority (to be high or low) of a corresponding cell according to the target information and/or an indication of prioritizing or down-prioritizing NES indicated by the network.

The target information includes an ID of an NES frequency or a frequency that is in an NES state, and/or an ID of an NES cell or a cell that is in an NES state. The target information further includes an intra-/inter-frequency excluded cell list. The specific UE selects or excludes a cell from a corresponding intra-/inter-frequency excluded cell list according to the target information and/or an indication of prioritizing or down-prioritizing NES indicated by the network. Optionally, the legacy UE uses an existing intra-/inter-frequency excluded cell list (i. e. the network configures or indicates one set of intra-/inter-frequency excluded cell list).

The target information includes an ID of an NES frequency or a frequency that is in an NES state, and/or an ID of an NES cell or a cell that is in an NES state. The target information further includes an intra-/inter-frequency white cell list. The specific UE selects or excludes a cell from a corresponding intra-/inter-frequency white cell list according to the target information and/or an indication of prioritizing or down-prioritizing NES indicated by the network. Optionally, the legacy UE uses an existing intra-/inter-frequency white cell list (i. e. the network configures or indicates one set of intra-/inter-frequency white cell list).

The target information includes an NES-specific frequency priority, and the target information is specific to the specific UE. The specific UE performs cell selection or reselection based on a frequency priority corresponding to the target information. Optionally, the legacy UE performs cell selection or reselection based on an existing frequency priority (i. e. with regard to a specific frequency or frequency list, the network configures or indicates multiple sets of frequency priorities, where one set is applied to the legacy UE, and another set is applied to the specific UE).

The target information includes an NES-specific cell selection or reselection parameter, such as a parameter (such as an offset) for a cell in the S criteria or an R criteria. The target information is specific to the specific UE. The specific UE performs cell selection or reselection based on a frequency priority corresponding to the target information. Optionally, the legacy UE performs cell selection or reselection based on an existing frequency priority (i. e. with regard to a specific frequency or frequency list, the network configures or indicates multiple sets of frequency priorities, where one set is applied to the legacy UE, and another set is applied to the specific UE).

The target information includes an NES-specific UAC configuration. The target information is specific to the specific UE. The specific UE performs access control based on a UAC configuration corresponding to the target information. Optionally, the legacy UE performs cell selection or reselection based on an existing UAC configuration (i. e. with regard to a specific frequency or frequency list or cell or public land mobile network (PLMN), the network configures or indicates multiple sets of UAC configurations, where one set is applied to the legacy UE, and another set is applied to the specific UE).

Optionally, if the legacy UE cannot access an NES cell or barred from an NES cell, the NES-specific target information does not need to be configured or considered.

Optionally, if both the legacy UE and the NES UE are allowed to access an NES cell, or the legacy UE is not barred from an NES cell, the region information will be configured or considered, or the NES-specific target information will be configured or considered.

Optionally, based on network strategies or implementation, whether the NES UE is to prioritize or down-prioritize an NES frequency/cell or whether the NES UE is to prioritize or down-prioritize an NES frequency/cell during cell selection or reselection, is determined.

The UE performs cell selection or reselection by using the first configuration.

Optionally, the specific UE and other UEs such as the legacy UE use different cell selection or reselection configurations/parameters or rules.

Optionally, the specific UE uses an NES-specific configuration or an additional configuration. Alternatively, the specific UE may adjust the configured cell selection or reselection configuration (for NES information), and perform NES-specific cell selection or reselection. Optionally, such behaviour is performed at a specific time, where the specific time is indicated by the network, pre-configured, or pre-defined.

Optionally, if the target information or the target information for the same cell or the same frequency is carried in an SIB and dedicated information, the UE performs cell selection or reselection according to the target information in the dedicated information. Optionally, within a pre-defined duration (timing advance (TA)) or in a pre-defined cell (specific area), the UE performs cell selection or reselection according to the target information in the dedicated information.

Optionally, all the NES UEs behave the same in the NES cell, or the network does not need to implement or configure different cell selection or reselection parameters (for the NES frequency or NES cell) for the NES UEs, or the NES UEs do not need to apply different cell selection or reselection (procedures or rules) or to use different cell selection or reselection parameters or configurations for the same NES cell or the same NES frequency or an NES cell or frequency.

Optionally, the NES UE applies a different cell selection or reselection (procedure or rule) or uses a different cell selection or reselection parameter or configuration from that of the legacy UE.

In an implementation:
If cell bar in an MIB or a reserved bit in an SIB is set to "barred", the legacy UE is barred directly, and the legacy UE cannot use a frequency priority and a cell selection and reselection parameter indicated by the network. Therefore, the priority or parameter is specific to the NES UE. Optionally, if there are both an NES cell and a non-NES cell at one frequency, the network may indicate different cell selection or reselection parameters in order for the UE to prioritize or down-prioritize the NES cell. Optionally, the NES UE determines, according to a new bar indication, whether the NES cell can be accessed. The new bar indication may be carried in an SIB other than the MIB, such as SIB1.

If the NES information is indicated in an SIB for cell reselection, such as SIB3/4/5, for the current cell, NES information of another intra-frequency cell or a neighbour frequency or a neighbour-frequency cell may be indicated, and/or a cell selection or reselection parameter for an NES frequency or a cell-specific frequency or a cell (or comparison with an existing configured offset) may be indicated, and/or which frequencies or cells are to be prioritized or down-prioritized may be indicated (the information may be additionally configured for the NES UE). The NES UE may perform NES-specific cell selection or reselection according to the information.

If legacy cell bar is set to "not barred" (cell bar = barred in the MIB, or a reserved bit is "reserved" in the SIB), then the both legacy UE and the NES UE can access. Multiple sets of intra-/inter-frequency excluded cell lists may be indicated, where one set is applied to the legacy UE and another one set is applied to the NES UE. Alternatively, one set of excluded cell list, as well as which cells in the cell list are NES cells or non-NES cells, is indicated. The NES UE determines, according to the cell list and the NES cell/non NES cell indication, which cells in the cell list cannot be accessed. For example, if cell list = cell1,2,3,4, where cell 1 is an NES cell, then the legacy UE cannot access cells 1, 2, 3, and 4, while NES UE cannot access cells 2, 3, and 4.

### In another implementation:

### Scenario1: Cell selection and the candidate camping cell is an NES cell

In legacy, the intra-/inter frequency excluded cell list is indicated in SIB3/4, and such excluded cell list is only applicable for cell reselection. Thus, for Scenario1, we can focus on the method that the legacy UE is barred by using cellBarred or cell reservation fields in MIB/SIB.

With this in mind, only the NES-capable UE can access the NES cell, e.g. the gNB introduces a new IE to allow the NES-capable UE access or not. And whether to allow NES-capable UE access or prioritize can depend on the gNB strategies.

On the other hand, if the legacy UE can be allowed for the NES cell, the situation changes. To have individual handling for the legacy UE and the NES-capable UE, we prefer the gNB to indicate the NES-specific cell-level cell selection parameters, or, the UE dynamic adapts cell selection parameters if the cell is an NES cell.

### Scenario2: Cell reselection and the neighbour cell is an NES cell

We assume that the UE now camps on the non-NES cells and the neighbour cell(s) to reselect can be NES cell. Since both Intra/InterFreqExcludedCellList and cellBarred or cell reservation fields in MIB/SIB are applicable for cell reselection, we understand Scenario2 can further split into the following two cases.

### Case2-1: legacy UE is barred by using Intra/InterFreqExcludedCellList

Normally, the gNB can indicate PCI information by using intra-/inter frequency excluded cell lists to block UEs accessing the specific cells. If the gNB would like to reuse such excluded cell list to block the legacy UE accessing the NES cells, the NES-Capable UE should be provided with another excluded cell list, otherwise, all UE have the same access operation on the NES cells.

### Case2-2: legacy UE is barred by using cellBarred or cell reservation fields in MIB/SIB

Similar to Scenario1, if the gNB can directly bar the legacy UE from the NES cell by using the current bar parameters and allow NES-capable UE to access the NES cell by a new indication, there is no need to have an additional enhancement to the NES-capable UE to prioritized NES cell or frequency, since only the NES-capable UE can use such cell or frequency. However, if the legacy UE can be allowed for the NES cell, to have individual handling for the legacy UE and the NES-capable UE, we prefer the gNB to indicate the NES-specific frequency/cell-level cell reselection configurations, or, the UE dynamic adapts cell reselection parameters if the cell is an NES cell.

In another implementation (including at least one of the following):
In the case that the legacy UEs are prevented from the NES cell, RAN2 considers to reuse the current cell (re)selection mechanism for NES-capable UEs, i.e. no enhancement is needed.

In the cell (re)selection, RAN2 assumes a unified behaviour of the NES-capable UEs in performing cell selection or reselection to an NES cell.

In the case that both the legacy UE and the NES-capable UE can (re)select the NES cell, RAN2 considers to introduce cell-level NES-specific cell (re)selection parameters to have individual handling for the UEs with/without the NES capability.

RAN2 assumes to rely on the network strategies or implementation on whether/when to prioritize or deprioritize the NES cell for the NES-capable UEs.

Referring to FIG. 4, FIG. 4 is a schematic diagram of a wireless communication method provided in embodiments of the disclosure. As illustrated in FIG. 4, the wireless communication method includes the following steps.

Step 401, a UE performs a first behaviour.

The first behaviour includes at least one of: random access, data transmission, cell selection, cell reselection, handover (HO), RRC state transition, system information acquisition, synchronization, camping, paging, or paging response.

In an optional embodiment of the disclosure, the UE performs the first behaviour if multiple carriers are deployed, or if multiple carriers are configured, or if there is a first cell, or if there is a first cell and a second cell. The first cell is a cell supporting a specific function, or a cell supporting an NES mode, or a cell to which an NES technology is applied, or a non-anchor cell, or a cell in which some information is not to be sent. The second cell is a cell different from the first cell, or an anchor cell, or a cell for assisting transmission or access in the first cell, or a secondary cell (Scell) or anchor cell of the first cell, or a cell in which information of the first cell or some of the information of the first cell is to be sent.

In an optional embodiment of the disclosure, in the first cell, an SSB and/or an MIB is to be transmitted, but no SIB or system information is to be transmitted. Alternatively, in the first cell, no SSB and/or MIB is to be transmitted, and no SIB or system information is to be transmitted.

In an optional embodiment of the disclosure, the UE performs the first behaviour as follows. The UE performs the first behaviour based on the first cell or the second cell. Alternatively, the UE performs the first behaviour based on the first cell and the second cell. Alternatively, the UE performs a second behaviour in the first behaviour based on the first cell, and performs a third behaviour in the first behaviour based on the second cell, where the second behaviour is different from or partially the same as the third behaviour.

Optionally, the second behaviour includes at least one of: random access, data transmission, handover, or RRC state transition, and the third behaviour includes at least one of: camping, paging, paging response, system information acquisition, cell selection, cell reselection, or RRC state transition.

Optionally, the second behaviour includes at least one of: random access, data transmission, handover, or RRC state transition, and the third behaviour includes at least one of: camping, paging, paging response, system information acquisition, cell selection, cell reselection, RRC state transition, random access, data transmission, or handover.

Optionally, the second behaviour includes at least one of: camping, paging, paging response, system information acquisition, cell selection, cell reselection, random access, data transmission, handover, or RRC state transition, and the third behaviour includes at least one of: camping, paging, paging response, system information acquisition, cell selection, cell reselection, or RRC state transition.

Optionally, the second behaviour includes at least one of: camping, paging, paging response, system information acquisition, cell selection, cell reselection, random access, data transmission, handover, or state transition, and the third behaviour includes at least one of: camping, paging, paging response, system information acquisition, cell selection, cell reselection, RRC state transition, random access, data transmission, or handover.

In an optional embodiment of the disclosure, if an SSB and/or an MIB is to be transmitted but no SIB or system information is to be transmitted in the first cell, the UE performs the first behaviour based on the first cell, or performs the first behaviour based on the second cell, or performs the second behaviour based on the first cell and performs the third behaviour based on the second cell.

Further, optionally, the UE prioritizes performing the first behaviour or the third behaviour based on the second cell.

In an optional embodiment of the disclosure, if no SSB and/or MIB is to be transmitted and no SIB or system information is to be transmitted in the first cell, the UE performs the first behaviour based on the second cell, or performs the second behaviour based on the first cell and performs the third behaviour based on the second cell.

In an optional embodiment of the disclosure, the UE selects to perform the first behaviour in the first cell and/or the second cell, and/or selects to perform the second behaviour in the first cell, and/or selects to perform the third behaviour in the second cell.

Alternatively, based on a first rule or a first policy or network indication or UE selection criteria, the UE selects to perform the first behaviour in the first cell and/or the second cell, and/or selects to perform the second behaviour in the first cell, and/or selects to perform the third behaviour in the second cell.

In an optional embodiment of the disclosure, the first rule, the first policy, the network indication, or the UE selection criteria includes at least one of: the first rule or the first policy being configured by a network side, a selection threshold or parameter or condition configured or indicated by a network, the network configuring or indicating to perform the first behaviour or the second behaviour or the third behaviour in the first cell or the second cell, content of the first behaviour configured or indicated by the network, content of the second behaviour configured or indicated by the network, content of the third behaviour configured or indicated by the network, an amount of data to be transmitted, a priority order, whether a random access configuration for the first cell is acquired by the UE, whether a data transmission configuration for the first cell is acquired by the UE, whether data transmission scheduling for the first cell is acquired by the UE, or a signal strength.

In an optional embodiment of the disclosure, if no SIB is to be transmitted in the first cell, the UE acquires system information of the first cell or an update of the system information of the first cell from the second cell. Alternatively, if no SIB is to be transmitted in the first cell, the UE acquires SIB1 of the first cell or an update of SIB1 system information of the first cell from the second cell.

In an optional embodiment of the disclosure, the UE returns to or reselects the second cell if the UE has entered an idle state or an inactive state or the UE has left a connected state. Additionally or alternatively, the UE performs at least one of: camping, paging monitoring, paging response, cell selection, or cell reselection in the second cell if the UE is in the idle state or the inactive state. Additionally or alternatively, the UE enters the connected state in the second cell if the UE is in the idle state or the inactive state. Additionally or alternatively, the UE enters the connected state in the second cell or the first cell if the UE is in the idle state or the inactive state. Additionally or alternatively, the UE performs data transmission in the second cell if the UE has entered the connected state in the second cell from the idle state or the inactive state. Additionally or alternatively, the UE performs data transmission in the second cell if the UE has entered the connected state in the second cell from the idle state or the inactive state, or the UE performs data transmission in the first cell if the UE has entered the connected state in the first cell from the idle state or the inactive state. Additionally or alternatively, the UE performs data transmission in the second cell until the UE leaves the connected state if the UE has entered the connected state in the second cell from the idle state or the inactive state. Additionally or alternatively, the UE performs data transmission in the second cell until the UE leaves the connected state if the UE has entered the connected state in the second cell from the idle state or the inactive state, or the UE performs data transmission in the first cell until the UE leaves the connected state if the UE has entered the connected state in the first cell from the idle state or the inactive state.

Hereinafter, with regard to the UE performing the first behaviour, another embodiment is further provided in embodiments of the disclosure.

Scenario 1: in an NES cell, an SSB is to be transmitted but no SIB is to be transmitted (optionally, the NES cell is the first cell, and an Scell of the NES cell is the second cell).

Optionally, a legacy UE does not camp on the NES cell, or does not perform data transmission/RACH in the NES cell.

Optionally, the behaviour of an NES UE may be at least one of the following. The NES UE camps on the NES cell and/or performs paging monitoring in the NES cell. The NES UE performs paging monitoring in the NES cell, initiates RACH, and performs paging response. The NES UE obtains an RACH configuration for the NES cell from the Scell (e. g., anchor cell) of the NES cell.

In the Scell (e. g., anchor cell) of the NES cell, system information of the NES cell, or at least one type of system information in the system information, or at least one system information information element (IE) in the system information is broadcast or carried, or only SIB1 of the NES cell or at least part of IE in SIB1 of the NES cell is broadcast or carried.

According to a pre-defined rule or criteria configured by a network, the NES UE determines whether to perform a related operation from the NES cell or from the Scell, and can further determine an NES cell from which the operation is to be performed (if there are multiple NES cells).

According to indication information of the NES cell or indication information of the Scell of the NES cell, the NES UE determines whether to perform RACH from the NES cell or to perform RACH from the Scell, and/or whether to perform data transmission from the NES cell or to perform data transmission from the Scell, and/or determines an NES cell from which RACH is to be performed.

According to indication information of the NES cell or indication information of the Scell of the NES cell, the NES UE determines whether to receive paging or perform paging response from the NES cell or to receive paging or perform paging response from the Scell, and/or determines an NES cell from which paging is to be received or paging response is to be performed.

According to data amount information, the NES UE determines whether to perform RACH from the NES cell or to perform RACH from the Scell, and/or whether to perform data transmission from the NES cell or to perform data transmission from the Scell, and/or whether to perform paging response from the NES cell or to perform paging response from the Scell, or can further determine an NES cell from which such operation is to be performed. For example, if the data amount is greater than a threshold, RACH and/or data transmission is to be performed from the NES; otherwise, RACH and/or data transmission is to be performed from the Scell. For instance, if the data amount is greater than threshold 1, the NES UE performs from NES cell 1; if the data amount is greater than threshold 1 and less than threshold 2, the NES UE performs from NES cell 2; otherwise, the NES UE performs from the Scell. Optionally, the threshold may be pre-defined, pre-configured, or indicated by the NES cell or the Scell.

According to channel quality information, the NES UE determines whether to perform RACH from the NES cell or to perform RACH from the Scell, and/or whether to perform data transmission from the NES cell or to perform data transmission from the Scell, and/or whether to respond to paging from the NES cell or to respond to paging from the Scell, or can further determine an NES cell from which such operation is to be performed. For example, a cell with the highest channel quality is selected to perform the operation. For instance, if the NES cell has the highest channel quality, the NES cell is selected. For another example, a cell of which the channel quality is higher than a threshold is selected to perform the operation. For instance, if the channel quality of the NES cell is higher than the threshold, the NES cell is selected; and if the channel quality of the anchor cell is higher than the threshold, the anchor cell is selected. Further, if there are multiple cells of which the channel quality is higher than the threshold, one cell is selected randomly from the multiple cells, or the NES cell is prioritized, or a cell with the highest quality is selected, or the anchor cell is prioritized. For another example, if the channel quality is greater than threshold 1, the operation is to be performed from NES cell 1; if the channel quality is greater than threshold 2, the operation is to be performed from NES cell 2; otherwise, the operation is to be performed from the Scell. Optionally, the threshold may be pre-defined, pre-configured, or indicated by the NES cell or the Scell.

If an RACH configuration for an NES cell is configured, or the UE has obtained the RACH configuration for the NES cell, then the UE knows the NES cell corresponding to the RACH configuration and performs RACH and/or data transmission from the NES cell.

The NES UE prioritizes performing RACH from the NES cell and/or performing data transmission from the NES cell.

If the RACH configuration for the NES cell and/or a data transmission configuration/scheduling for the NES cell is obtained by the NES UE, the NES UE performs RACH from the NES cell and/or performs data transmission from the NES cell.

The NES UE periodically obtains, from the Scell, system information of the NES cell, or whether there is paging of the NES cell or an update of the system information of the NES cell.

According to an indication of the NES cell (e. g., the NES cell is notified from the Scell), the NES UE obtains the system information of the NES cell from the Scell, or obtains whether there is paging of the NES cell or an update of the system information of the NES cell, or switches to the Scell, or switches to the Scell to obtain the system information of the NES cell or to obtain whether there is paging of the NES cell or an update of the system information of the NES cell.

After RACH is performed from the NES cell, the NES UE enters a connected state, and obtains a transmission resource from the NES cell to perform data transmission.

The NES UE camps on an anchor cell (the Scell of the NES cell), and further obtains system information of the NES cell, such as SIB1, from the anchor cell. The NES UE performs RACH and/or data transmission from the NES cell according to a specific rule, or the NES UE performs RACH and/or data transmission from the NES cell. Further, the NES UE switches or redirects to another cell according to a handover command or a dedicated RRC message from the network. Further, the NES UE performs paging monitoring from the Scell, instead of performing paging monitoring from the NES cell.

The system information of the NES cell, such as SIB1, is obtained from the anchor cell. The NES UE performs RACH and/or data transmission from the NES cell according to a specific rule, or the NES UE performs RACH and/or data transmission from the NES cell. Optionally, the system information of the NES cell does not include an SIB other than SIB1, for example, does not include a parameter used for cell selection or reselection, such as SIBs 2, 3, 4, and 5 corresponding to the NES cell.

The NES cell does not support cell selection or reselection of the UE, and/or does not indicate a parameter used for cell selection or reselection, such as SIBs 2, 3, 4, and 5 corresponding to the NES cell. If the UE accesses the network or performs RACH from the NES cell, the UE, periodically or after a certain time period or after completion of data transmission, returns to an anchor cell, or returns to an idle or inactive state, or leaves a connected state, or requests to switch or redirect to the anchor cell. Alternatively, if the UE accesses the network or performs RACH from the NES cell, the network requests or indicates to the UE to return to the anchor cell periodically, or after a certain time period, or after completion of data transmission, or the network requests or indicates to the UE to return to the idle or inactive state, or the network requests or indicates to the UE to leave the connected state, or the network requests or indicates to the UE to switch or redirect to the anchor cell.

The NES cell may be one of a primary cell (Pcell), a primary secondary cell (Pscell), or an Scell.

Scenario 2: in an NES cell, no SSB is to be transmitted and no SIB is to be transmitted (optionally, the NES cell is the first cell, an Scell of the NES cell is the second cell).

Optionally, a legacy UE does not camp on the NES cell, or does not perform data transmission/RACH in the NES cell.

Optionally, the behaviour of an NES UE may be at least one of the following.

The NES UE camps on the Scell (e. g., anchor cell) of the NES cell, and/or performs paging monitoring from the Scell of the NES cell.

The NES cell can only serve as an Scell for the UE, and cannot serve as an SpCell.

The NES UE performs paging monitoring in the Scell (e. g., anchor cell) of the NES cell. Optionally, the NES UE initiates RACH and/or performs data transmission in the NES cell according to an indication from the Scell (e. g., an indication of performing data transmission or paging in the NES) or whether a cell corresponding to a paging indication is the NES cell.

The NES UE performs paging monitoring in the Scell (e. g., anchor cell) of the NES cell. Optionally, the NES UE initiates RACH and/or performs data transmission in the Scell of the NES cell according to an indication from the Scell (e. g., an indication of performing data transmission or paging in the Scell) or whether a cell corresponding to a paging indication is a non-NES cell.

If the NES UE performs RACH and/or performs data transmission in the NES cell, the NES UE switches to the Scell of the NES under a first condition. Optionally, the first condition may include periodically, for example, the NES UE periodically switches to the NES cell or the Scell. Optionally, the first condition may include a first duration, where the first duration may be indicated by the Scell or pre-configured. Optionally, the first condition includes resource cut-off, for example, a resource for NES data transmission becomes invalid/use of the resource for NES data transmission is completed.

The NES UE obtains an RACH configuration and/or a data transmission configuration for the NES cell from the Scell (e. g., anchor cell) of the NES cell.

The NES UE determines, according to indication information of the NES cell or indication information of the Scell of the NES cell, whether to perform RACH from the NES cell or to perform RACH from the Scell, and/or whether to perform data transmission from the NES cell or to perform data transmission from the Scell.

The NES UE determines, according to data amount information, whether to perform RACH from the NES cell or to perform RACH from the Scell, and/or whether to perform data transmission from the NES cell or to perform data transmission from the Scell. For example, if the data amount is greater than a threshold, RACH and/or data transmission is to be performed from the NES; otherwise, RACH and/or data transmission is to be performed from the Scell.

The NES UE prioritizes performing RACH from the NES cell and/or performing data transmission from the NES cell.

If the RACH configuration for the NES cell and/or a data transmission configuration/scheduling for the NES cell is obtained by the NES UE, the NES UE performs RACH from the NES cell and/or performs data transmission from the NES cell.

The NES UE periodically obtains, from the Scell, system information of the NES cell, or whether there is paging of the NES cell or an update of the system information of the NES cell.

According to an indication of the NES cell (e. g., the NES cell is notified from the Scell), the NES UE obtains the system information of the NES cell from the Scell, or obtains whether there is paging of the NES cell or an update of the system information of the NES cell, or switches to the Scell, or switches to the Scell to obtain the system information of the NES cell or to obtain whether there is paging of the NES cell or an update of the system information of the NES cell.

After RACH is performed from the NES cell or the Scell, the NES UE enters a connected state, and obtains a transmission resource to perform data transmission.

In the Scell (e. g., anchor cell) of the NES cell, system information of the NES cell, or at least one type of system information in the system information, or at least one system information IE in the system information is broadcast or carried, or only SIB1 of the NES cell or at least part of IE in SIB1 of the NES cell is broadcast or carried.

If the UE accesses the network or performs RACH from the NES cell, the UE, periodically or after a certain time period or after completion of data transmission, returns to an anchor cell, or returns to an idle or inactive state, or leaves a connected state, or requests to switch or redirect to the anchor cell. Alternatively, if the UE accesses the network or performs RACH from the NES cell, the network requests or indicates to the UE to return to the anchor cell periodically, or after a certain time period, or after completion of data transmission, or the network requests or indicates to the UE to return to the idle or inactive state, or the network requests or indicates to the UE to leave the connected state, or the network requests or indicates to the UE to switch or redirect to the anchor cell.

In addition, in another implementation, the UE behaviour in the following table may be adopted for at least one of the case where an SSB of an NES cell is to be sent or the case where no SSB is to be sent. Optionally, in the case where an SSB of an NES cell is to be sent or no SSB is to be sent, all or part of system information of the NES cell is further included (optionally, the NES cell is the first cell, the Scell of the NES cell is the second cell).

| Which cell to camp? | Which cell to monitor paging | When retune to SIB-less cell? | Release to IDLE/INACTIVE |
|---|---|---|---|
| Only in anchor cell | Only in anchor cell | Upon reception of RRC configuration from anchor cell (i.e. after entering CONNECTED state in anchor cell) | Retune to anchor cell |
| Only in anchor cell | Only in anchor cell | Upon reception of management object (MO) traffic or paging in anchor cell | Retune to anchor cell |

In another implementation, at least one of the following behaviours may be considered:
In the case that the NES cell transmits neither SSB nor SI message, RAN2 considers the NES cell as a serving cell other than SpCell and checks whether/how to enhance the current CA mechanism.

In the case that the NES cell transmits SSB but not the system information, if the UE supports CA, RAN2 considers the NES cell as a serving cell other than SpCell and checks whether/how to enhance the current CA mechanism.

In the case that the NES cell transmits SSB but not the system information, the SIB1 of the NES cell can be delivered via the SI of the anchor cell. FFS on how the UE knows the association between the NES cell and the anchor cell.
In the case that the NES cell transmits SSB but not the system information, the UE camps on the anchor cell.

In the case that the NES cell transmits SSB but not the system information, the UE can access the NES cell by using the NES cell-related RACH configuration which is indicated by the anchor cell.

The disclosure further relates to a handover procedure. In the case of NES, for the following case where a candidate cell for handover or a target cell for handover or a candidate target cell for handover is an NES cell, or a cell supporting an NES technology, or a cell to which an NES technology is applied, the network may configure selection priorities of multiple candidate cells in a conditional handover (CHO) configuration. Further, the UE selects a candidate cell for handover according to the priority. For example, a cell with the highest priority is selected for handover if there are multiple candidates that satisfy a certain condition. For another example, if there are multiple candidates that satisfy a certain condition, a cell with the highest priority is selected for handover according to information of the NES cell.

Exemplarily, an illustration of such scenario is as follows: UEs are HO'ed due to source link degradation, where TARGET cell is selected with consideration of whether it is NES cell or not. Exemplarily, for the scenario, an exemplary scheme is as follows (including at least one of the following):
On top of existing CHO mechanism, gNB can configure a priority value for each candidate target cell.

The setting of priority value is transmitted to the UE.

If more than 1 candidate target cell satisfy the existing CHO condition (i.e. A3 / A5 like event), the UE selects target cell for HO execution based on their priority value configured by source gNB.

In an optional embodiment of the disclosure, a wireless communication apparatus is further provided. The wireless communication apparatus includes a sending module. The sending module is configured to send a network discontinuous communication configuration to a UE, where the network discontinuous communication configuration includes a network discontinuous communication configuration for a cell and/or a network discontinuous communication configuration for a base station.

The wireless communication apparatus can further include other modules. Embodiments of the disclosure are not limited in this regard. The wireless communication apparatus can be configured to implement the method performed by the base station in the embodiments illustrated in FIG. 2.

In an optional embodiment of the disclosure, a wireless communication apparatus is further provided. The wireless communication apparatus includes a receiving module. The receiving module is configured to receive a network discontinuous communication configuration sent by a base station, wherein the network discontinuous communication configuration includes a network discontinuous communication configuration for a cell and/or a network discontinuous communication configuration for the base station.

The wireless communication apparatus can further include other modules. Embodiments of the disclosure are not limited in this regard. The wireless communication apparatus can be configured to implement the method performed by the UE in the embodiments illustrated in FIG. 2.

In an optional embodiment of the disclosure, a wireless communication apparatus is further provided. The wireless communication apparatus includes a sending module. The sending module is configured to send target information for a cell and/or a frequency to a UE, where the target information indicates to the UE to perform cell selection or cell reselection or access control, or the target information indicates to the UE to perform cell selection or cell reselection.

The wireless communication apparatus can further include other modules. Embodiments of the disclosure are not limited in this regard. The wireless communication apparatus can be configured to implement the method performed by the base station in the embodiments illustrated in FIG. 3.

In an optional embodiment of the disclosure, a wireless communication apparatus is further provided. The wireless communication apparatus includes a receiving module and an executing module. The receiving module is configured to receive target information for a cell and/or a frequency sent by a base station. The executing module is configured to perform cell selection or cell reselection or access control according to the target information, or configured for the UE to perform cell selection or cell reselection according to the target information.

The wireless communication apparatus can further include other modules. Embodiments of the disclosure are not limited in this regard. The wireless communication apparatus can be configured to implement the method performed by the UE in the embodiments illustrated in FIG. 3.

In an optional embodiment of the disclosure, a wireless communication apparatus is further provided. The wireless communication apparatus includes an executing module. The executing module is configured to perform a first behaviour, where the first behaviour includes at least one of: random access, data transmission, cell selection, cell reselection, handover, RRC state transition, system information acquisition, synchronization, camping, paging, or paging response.

The wireless communication apparatus can further include other modules. Embodiments of the disclosure are not limited in this regard. The wireless communication apparatus can be configured to implement the method performed by the UE in the embodiments illustrated in FIG. 4.

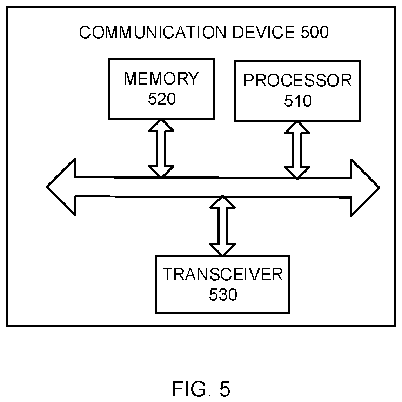

FIG. 5 is a schematic structural diagram of a communication device provided in embodiments of the disclosure. The communication device may be a UE or a base station. The communication device 500 illustrated in FIG. 5 includes a processor 510. The processor 510 may invoke and run computer programs from a memory, so as to implement the method in embodiments of the disclosure.

In some embodiments, as illustrated in FIG. 5, the communication device 500 may further include a memory 520, where the processor 510 can invoke and execute computer programs stored in the memory 520 to implement the method in embodiments of the disclosure.

The memory 520 may be a separate device independent of the processor 510, or may be integrated into the processor 510.

In some embodiments, as illustrated in FIG. 5, the communication device 500 may further include a transceiver 530. The processor 510 can control the transceiver 530 to communicate with other devices, and specifically, to send information or data to other devices or receive information or data sent by other devices.

The transceiver 530 may include a transmitter and a receiver. The transceiver 530 can further include an antenna, where one or more antennas may be provided.

In some embodiments, the communication device 500 may implement corresponding procedures implemented by the UE or the base station in various methods of embodiments of the disclosure, which are not described again herein for brevity.

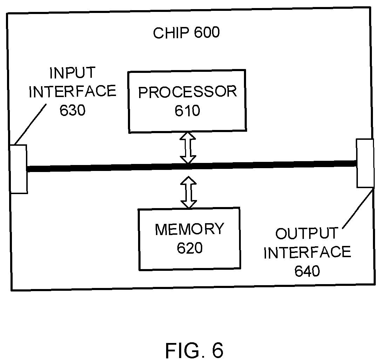

FIG. 6 is a schematic structural diagram of a chip according to embodiments of the disclosure. The chip 600 illustrated in FIG. 6 includes a processor 610. The processor 610 may invoke and run computer programs from a memory, so as to implement the method in embodiments of the disclosure.

In some embodiments, as illustrated in FIG. 6, the chip 600 may further include a memory 620. The processor 610 can invoke and execute computer programs stored in the memory 620, so as to implement the method in embodiments of the disclosure.

The memory 620 may be a separate device independent of the processor 610, or may be integrated into the processor 610.

In some embodiments, the chip 600 may further include an input interface 630. The processor 610 can control the input interface 630 to communicate with other devices or chips, and specifically, to obtain information or data sent by other devices or chips.

In some embodiments, the chip 600 may further include an output interface 640. The processor 610 can control the output interface 640 to communicate with other devices or chips, and specifically, to output information or data to other devices or chips.

In some embodiments, the chip 600 may be applied to the communication device in embodiments of the disclosure, and the chip 600 may implement corresponding procedures implemented by the UE or the base station in various methods in embodiments of the disclosure, which are not described again herein for brevity.

It should be understood that, the chip 600 mentioned in embodiments of the disclosure may also be referred to as a system-on-chip (SOC), or the like.

It should be understood that, the processor in embodiments of the disclosure may be an integrated circuit chip with signal processing capabilities. During implementation, each step of the foregoing method embodiments may be completed by an integrated logic circuit of hardware in the processor or an instruction in the form of software. The processor may be a general-purpose processor, a digital signal processor (DSP), an application specific integrated circuit (ASIC), a field programmable gate array (FPGA), or other programmable logic devices, discrete gates or transistor logic devices, discrete hardware components. The methods, steps, and logic blocks disclosed in embodiments of the disclosure can be implemented or executed. The general-purpose processor may be a microprocessor, or the processor may be any conventional processor or the like. The steps of the method disclosed in embodiments of the disclosure may be directly implemented by a hardware decoding processor, or may be performed by hardware and software modules in the decoding processor. The software module can be located in a storage medium such as a random access memory (RAM), a flash memory, a read only memory (ROM), a programmable ROM (PROM), or an electrically erasable programmable memory, registers, and the like. The storage medium is located in the memory. The processor reads the information in the memory, and completes the steps of the method described above with the hardware thereof.

It can be understood that, the memory in embodiments of the disclosure may be a volatile memory or a non-volatile memory, or may include both the volatile memory and the non-volatile memory. The non-volatile memory may be a ROM, a PROM, an erasable PROM (EPROM), an electrically EPROM (EEPROM), or flash memory. The volatile memory can be a RAM that acts as an external cache. By way of example but not limitation, many forms of RAM are available, such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a direct rambus RAM (DR RAM). It should be noted that, the memory of the systems and methods described in the disclosure is intended to include, but is not limited to, these and any other suitable types of memory.

It should be understood that, the memory above is intended for illustration rather than limitation. For example, the memory in embodiments of the disclosure may also be an SRAM, a DRAM, an SDRAM, a DDR SDRAM, an ESDRAM, an SLDRAM, a DR RAM, etc. In other words, the memory in embodiments of the disclosure is intended to include, but is not limited to, these and any other suitable types of memory.

Embodiments of the disclosure further provide a computer-readable storage medium. The computer-readable storage medium is configured to store computer programs.

Optionally, the computer-readable storage medium may be applied to the UE or the base station in embodiments of the disclosure, and the computer programs are operable with the UE or the base station to perform corresponding operations implemented by the UE or the base station in various methods in embodiments of the disclosure, which are not described again herein for brevity.

Embodiments of the disclosure further provide a computer program product. The computer program product includes computer program instructions.

Optionally, the computer program product may be applied to the UE or the base station in embodiments of the disclosure, and the computer program instructions are operable with the UE or the base station to perform corresponding operations implemented by the UE or the base station in various methods in embodiments of the disclosure, which are not described again herein for brevity.

Embodiments of the disclosure further provide a computer program.

Optionally, the computer program may be applied to the UE or the base station in embodiments of the disclosure. The computer program, when executed by the UE or the base station, is operable with the UE or the base station to perform corresponding operations implemented by the UE or the base station in various methods in embodiments of the disclosure, which are not described again herein for brevity.

Those of ordinary skill in the art will appreciate that units and algorithmic operations of various examples described in connection with embodiments of the disclosure can be implemented by electronic hardware or by a combination of computer software and electronic hardware. Whether these functions are performed by means of hardware or software depends on the application and the design constraints of the associated technical solution. Those skilled in the art may use different methods with regard to each particular application to implement the described functionality, but such methods should not be regarded as lying beyond the scope of the disclosure.

It will be evident to those skilled in the art that, for the sake of convenience and brevity, in terms of the specific working processes of the foregoing systems, apparatuses, and units, reference can be made to the corresponding processes in the foregoing method embodiments, which will not be repeated herein.

It will be appreciated that the systems, apparatuses, and methods disclosed in embodiments of the disclosure may also be implemented in various other manners. For example, the above apparatus embodiments are merely illustrative, e.g., the division of units is only a division of logical functions, and other manners of division may be available in practice, e.g., multiple units or assemblies may be combined or may be integrated into another system, or some features may be ignored or skipped. In other respects, the coupling or direct coupling or communication connection as illustrated or discussed may be an indirect coupling or communication connection through some interface, device, or unit, and may be electrical, mechanical, or otherwise.

Separated units as illustrated may or may not be physically separated. Components displayed as units may or may not be physical units, and may reside at one location or may be distributed to multiple networked units. Some or all of the units may be selectively adopted according to practical needs to achieve desired objectives of the disclosure.

In addition, various functional units described in various embodiments of the disclosure may be integrated into one processing unit or may be present as a number of physically separated units, and two or more units may be integrated into one.

If the functions are implemented as software functional units and sold or used as standalone products, they may be stored in a computer-readable storage medium. Based on such an understanding, the essential technical solution, or the portion that contributes to the prior art, or part of the technical solution of the disclosure may be embodied as software products. The computer software products can be stored in a storage medium and may include multiple instructions that, when executed, can cause a computer device, e.g., a personal computer, a server, a network device, etc., to execute some or all operations of the methods described in various embodiments of the disclosure. The above storage medium may include various kinds of media that can store program codes, such as a universal serial bus (USB) flash disk, a mobile hard drive, a ROM, a RAM, a magnetic disk, or an optical disk.

Various technical features of the foregoing embodiments can be combined in any way. For the sake of brevity in illustration, some possible combinations of the technical features in the foregoing embodiments are not described. However, as long as the combinations of these technical features is not contradictory, they shall all be considered to fall within the scope of the specification.

The foregoing embodiments merely represent several implementations of the disclosure, and are described in detail, but are not intended to limit the scope of the claims. It should be noted that, for those of ordinary skill in the art, various modifications and improvements can be made without departing from the concept of the disclosure, and all these modifications and improvements belong to the protection scope of the disclosure. Therefore, the protection scope of the disclosure shall be subject to the appended claims.

## Claims

1. A wireless communication method, comprising:
sending, by a base station, a network discontinuous communication configuration to a user equipment (UE), wherein the network discontinuous communication configuration comprises a network discontinuous communication configuration for a cell and/or a network discontinuous communication configuration for the base station.

2. The method of claim 1, wherein the network discontinuous communication configuration comprises at least one of:
the network discontinuous communication configuration being configured per cell;
the network discontinuous communication configuration being configured per base station;
the network discontinuous communication configuration being configured per media access control (MAC) entity;
the network discontinuous communication configuration being configured per UE; or
the network discontinuous communication configuration being configured per UE group.

3. The method of claim 1 or 2, wherein the network discontinuous communication configuration comprises one of:
a network discontinuous reception (DRX) configuration;
a network discontinuous transmission (DTX) configuration;
the network DRX configuration and the network DTX configuration; or
a network DRX and DTX configuration, wherein
the network DRX configuration comprises a configuration parameter for network DRX, the network DTX configuration comprises a configuration parameter for network DTX, the network DRX and DTX configuration comprises a network discontinuous transmission/reception configuration, and discontinuous transmission/reception comprises transmission and/or reception.

4. The method of claim 3, wherein the network DRX configuration and the network DTX configuration are carried in different messages, or the network DRX configuration and the network DTX configuration are carried in the same message.

5. The method of any of claims 1 to 4, wherein the network discontinuous communication configuration is carried in at least one of: a radio resource control (RRC) message, system information, or dynamic information.

6. The method of claim 5, wherein the dynamic information comprises downlink control information (DCI) and/or a MAC control element (MAC CE), and the RRC message comprises a UE-specific RRC message or a UE-group RRC message.

7. The method of any of claims 1 to 6, wherein sending, by the base station, the network discontinuous communication configuration to the UE comprises at least one of:
sending, by the base station, one network discontinuous communication configuration to the UE; or
sending, by the base station, a plurality of network discontinuous communication configurations to the UE.

8. The method of any of claims 1 to 7, wherein
the network discontinuous communication configuration is configured, adjusted, activated, and/or deactivated via one type of information; or
the network discontinuous communication configuration is configured, adjusted, activated, and/or deactivated via a plurality of types of information.

9. The method of any of claims 1 to 8, further comprising:
sending, by the base station, dynamic indication information to the UE, wherein the dynamic indication information is used for indicating at least one of:
indication of the network discontinuous communication configuration;
adjustment of the network discontinuous communication configuration; or
indication of activation or deactivation of one or more network discontinuous communication configurations.

10. The method of claim 9, wherein the dynamic indication information indicates at least one of:
the network discontinuous communication configuration;
adjustment information of the network discontinuous communication configuration;
an adjustment parameter of the network discontinuous communication configuration;
activation information of the network discontinuous communication configuration;
deactivation information of the network discontinuous communication configuration; or
an enabling time, an enabling moment, a use duration, or a disabling moment of the network discontinuous communication configuration.

11. The method of claim 9 or 10, wherein a validity range of the dynamic indication information comprises at least one of:
within a first duration;
within a first duration following reception of the dynamic indication information, or within a first duration corresponding to the dynamic indication information;
a specific base station, or a specific base station indicated;
a specific cell, or a specific cell indicated;
a specific area, or a specific area indicated;
a specific UE, or a specific UE indicated.

12. The method of claim 11, wherein the validity range can be at least one of:
pre-configured, pre-defined, indicated by layer 1 (L1)/layer 2 (L2) signaling, carried in the dynamic indication, configured via an RRC message, or configured via system information.

13. The method of any of claims 1 to 12, wherein the network discontinuous communication configuration comprises at least one of:
a configuration index;
a periodicity corresponding to the configuration;
a start time of use of the configuration;
a duration of an active state of network discontinuous communication;
a start time of the active state of network discontinuous communication;
an end time of the active state of network discontinuous communication;
a timer configuration corresponding to the active state of network discontinuous communication;
a duration of a non-active state of network discontinuous communication;
a start time of the non-active state of network discontinuous communication;
an end time of the non-active state of network discontinuous communication;
a timer configuration corresponding to the non-active state of network discontinuous communication;
a UE behaviour or a network-side behaviour corresponding to the active state of network discontinuous communication;
indication information of the UE behaviour or indication information of the network-side behaviour corresponding to the active state of network discontinuous communication;
a UE behaviour or a network-side behaviour corresponding to the non-active state of network discontinuous communication;
indication information of the UE behaviour or indication information of the network-side behaviour corresponding to the non-active state of network discontinuous communication; or
mode information.

14. The method of claim 13, wherein the mode information indicates a behaviour mode of the UE and/or a behaviour mode of a network side, and the behaviour mode comprises at least one of:
transmission information involved;
a type of information allowed for transmission;
a type of information not allowed for transmission;
the type of information allowed for transmission and the type of information not allowed for transmission; or
a conflict handling mode.

15. The method of claim 13, wherein the UE behaviour or the network-side behaviour comprises one of:
a type of information allowed for transmission;
a type of information not allowed for transmission; or
the type of information allowed for transmission and the type of information not allowed for transmission.

16. The method of claim 7, wherein when the base station sends the plurality of network discontinuous communication configurations to the UE, the method further comprises:
sending, by the base station, a first configuration to the UE, wherein the first configuration comprises at least one of:
an execution order or patterns of the plurality of network discontinuous communication configurations; or
a default network discontinuous communication configuration in the plurality of network discontinuous communication configurations.

17. The method of any of claims 1 to 16, further comprising:
performing, by the base station, a first network behaviour when the cell satisfies a first condition, wherein
the first condition comprises at least one of: the cell being transitioned to a network energy saving (NES) state, or the cell being transitioned to a non-active state of network discontinuous communication; and
the first network behaviour comprises at least one of: indicating the UE to deactivate the cell, indicating the UE to stop transmitting specific information, or stopping transmitting specific information.

18. The method of any of claims 1 to 17, further comprising:
performing, by the base station, a second network behaviour when the cell satisfies a second condition, wherein
the second condition comprises at least one of: the cell being transitioned to a non-NES state, or the cell being transitioned to an active state of network discontinuous communication; and
the second network behaviour comprises at least one of: indicating the UE to activate the cell, indicating the UE to transmit specific information, or transmitting specific information.

19. The method of claim 17 or 18, further comprising:
in a target case, performing, by the base station, a first network behaviour when the cell satisfies a first condition; and/or
in the target case, performing, by the base station, a network UE behaviour when the cell satisfies a second condition; wherein
the target case comprises at least one of: a multi-carrier coverage scenario, a multi-carrier configuration scenario, a dual connectivity (DC) scenario, or a carrier aggregation (CA) scenario.

20. A wireless communication method, comprising:
receiving, by a user equipment (UE), a network discontinuous communication configuration sent by a base station, wherein the network discontinuous communication configuration comprises a network discontinuous communication configuration for a cell and/or a network discontinuous communication configuration for the base station.

21. The method of claim 20, wherein the network discontinuous communication configuration comprises at least one of:
the network discontinuous communication configuration being configured per cell;
the network discontinuous communication configuration being configured per base station;
the network discontinuous communication configuration being configured per media access control (MAC) entity;
the network discontinuous communication configuration being configured per UE; or
the network discontinuous communication configuration being configured per UE group.

22. The method of claim 20 or 21, wherein the network discontinuous communication configuration comprises one of:
a network discontinuous reception (DRX) configuration;
a network discontinuous transmission (DTX) configuration;
the network DRX configuration and the network DTX configuration; or
a network DRX and DTX configuration, wherein
the network DRX configuration comprises a configuration parameter for network DRX, the network DTX configuration comprises a configuration parameter for network DTX, the network DRX and DTX configuration comprises a network discontinuous transmission/reception configuration, and discontinuous transmission/reception comprises transmission and/or reception.

23. The method of any of claims 20 to 22, further comprising at least one of:
performing, by the UE, transmission and/or reception according to the network discontinuous communication configuration;
performing, by the UE, transmission according to the network DTX configuration; or
performing, by the UE, reception according to the network DRX configuration.

24. The method of any of claims 20 to 23, further comprising at least one of:
when both network DTX and UE DRX are in an active state, performing, by the UE, communication according to the network DTX configuration and/or a UE DRX configuration;
when network DTX is in an active state and UE DRX is in a non-active state, performing, by the UE, communication according to the network DTX configuration or the UE DRX configuration;
when network DTX is in an active state, considering that UE DRX is in use or enabled, or communication can be performed according to UE DRX;
when network DTX is in a non-active state and UE DRX is in an active state, performing, by the UE, communication according to the network DTX configuration, or considering that UE DRX is in a non-active state; or
when both network DTX and UE DRX are in a non-active state, performing, by the UE, communication according to the network DTX configuration and/or the UE DRX configuration, or considering that DRX of the UE is in a non-active state, wherein
the UE DRX configuration comprises a configuration parameter for DRX of the UE.

25. The method of claim 22, wherein the network DRX configuration and the network DTX configuration are carried in different messages, or the network DRX configuration and the network DTX configuration are carried in the same message.

26. The method of any of claims 20 to 25, wherein the network discontinuous communication configuration is carried in at least one of: a radio resource control (RRC) message, system information, or dynamic information.

27. The method of claim 26, wherein the dynamic information comprises downlink control information (DCI) and/or a MAC control element (MAC CE), and the RRC message comprises a UE-specific RRC message or a UE-group RRC message.

28. The method of any of claims 20 to 27, wherein receiving, by the UE, the network discontinuous communication configuration sent by the base station comprises at least one of:
receiving, by the UE, one network discontinuous communication configuration sent by the base station; or
receiving, by the UE, a plurality of network discontinuous communication configurations sent by the base station.

29. The method of any of claims 20 to 28, wherein
the network discontinuous communication configuration is configured, adjusted, activated, and/or deactivated via one type of information; or
the network discontinuous communication configuration is configured, adjusted, activated, and/or deactivated via a plurality of types of information.

30. The method of any of claims 20 to 29, further comprising:
receiving, by the UE, dynamic indication information sent by the base station, wherein the dynamic indication information indicates to at least one of:
indication of the network discontinuous communication configuration;
adjustment of the network discontinuous communication configuration; or
indication of activation or deactivation of one or more network discontinuous communication configurations.

31. The method of claim 30, wherein the UE performs at least one of the following based on the dynamic indication information:
the network discontinuous communication configuration;
adjustment information of the network discontinuous communication configuration;
an adjustment parameter of the network discontinuous communication configuration;
activation information of the network discontinuous communication configuration;
deactivation information of the network discontinuous communication configuration; or
an enabling time, an enabling moment, a use duration, or a disabling moment of the network discontinuous communication configuration.

32. The method of claim 30 or 31, wherein a validity range of the dynamic indication information comprises at least one of:
within a first duration;
within a first duration following reception of the dynamic indication information, or within a first duration corresponding to the dynamic indication information;
a specific base station, or a specific base station indicated;
a specific cell, or a specific cell indicated;
a specific area, or a specific area indicated;
a specific UE, or a specific UE indicated.

33. The method of claim 32, wherein the validity range can be at least one of:
pre-configured, pre-defined, indicated by layer 1 (L1)/layer 2 (L2) signaling, carried in the dynamic indication, configured via an RRC message, or configured via system information.

34. The method of any of claims 20 to 33, wherein the network discontinuous communication configuration comprises at least one of:
a configuration index;
a periodicity corresponding to the configuration;
a start time of use of the configuration;
a duration of an active state of network discontinuous communication;
a start time of the active state of network discontinuous communication;
an end time of the active state of network discontinuous communication;
a timer configuration corresponding to the active state of network discontinuous communication;
a duration of a non-active state of network discontinuous communication;
a start time of the non-active state of network discontinuous communication;
an end time of the non-active state of network discontinuous communication;
a timer configuration corresponding to the non-active state of network discontinuous communication;
a UE behaviour or a network-side behaviour corresponding to the active state of network discontinuous communication;
indication information of the UE behaviour or indication information of the network-side behaviour corresponding to the active state of network discontinuous communication;
a UE behaviour or a network-side behaviour corresponding to the non-active state of network discontinuous communication;
indication information of the UE behaviour or indication information of the network-side behaviour corresponding to the non-active state of network discontinuous communication; or
mode information.

35. The method of claim 34, wherein the mode information indicates a behaviour mode of the UE and/or a behaviour mode of a network side, and the behaviour mode comprises at least one of:
transmission information involved;
a type of information allowed for transmission;
a type of information not allowed for transmission;
the type of information allowed for transmission and the type of information not allowed for transmission; or
a conflict handling mode.

36. The method of claim 34, wherein the UE behaviour or the network-side behaviour comprises one of:
a type of information allowed for transmission;
a type of information not allowed for transmission; or
the type of information allowed for transmission and the type of information not allowed for transmission.

37. The method of claim 28, wherein when the UE receives the plurality of network discontinuous communication configurations sent by the base station, the method further comprises:
receiving, by the UE, a first configuration sent by the base station, wherein the first configuration comprises at least one of:
an execution order or patterns of the plurality of network discontinuous communication configurations; or
a default network discontinuous communication configuration in the plurality of network discontinuous communication configurations.

38. The method of any of claims 20 to 37, further comprising:
performing, by the UE, a first UE behaviour when the cell satisfies a first condition, wherein
the first condition comprises at least one of: the cell being transitioned to a network energy saving (NES) state, or the cell being transitioned to a non-active state of network discontinuous communication; and
the first UE behaviour comprises at least one of: deactivating the cell, deactivating the cell according to an indication from the base station, stopping transmitting specific information according to an indication from the base station, stopping transmitting specific information, requesting the base station to deactivate the cell, requesting the base station to stop transmitting specific information, or requesting the base station to stop transmitting specific information.

39. The method of any of claims 19 to 37, further comprising:
performing, by the UE, a second UE behaviour when the cell satisfies a second condition, wherein
the second condition comprises at least one of: the cell being transitioned to a non-NES state, or the cell being transitioned to an active state of network discontinuous communication; and
the second UE behaviour comprises at least one of: activating the cell, activating the cell according to an indication from the base station, transmitting specific information according to an indication from the base station, transmitting specific information, requesting the base station to activate the cell, requesting the base station to transmit specific information, or requesting the base station to transmit specific information.

40. The method of claim 38 or 39, further comprising:
in a target case, performing, by the UE, a first UE behaviour when the cell satisfies a first condition; and/or
in the target case, performing, by the UE, a second UE behaviour when the cell satisfies a second condition; wherein
the target case comprises at least one of: a multi-carrier coverage scenario, a multi-carrier configuration scenario, a dual connectivity (DC) scenario, or a carrier aggregation (CA) scenario.

41. The method of any of claims 20 to 40, comprising at least one of:
when the UE receives or uses a network discontinuous communication configuration for a MAC entity, using, by the UE, a UE discontinuous transmission/reception configuration for the MAC entity or performing a UE discontinuous transmission/reception behaviour for the MAC entity;
when the UE uses different network discontinuous communication configurations for different cells, for the UE or a MAC entity, using, by the UE, different UE discontinuous transmission/reception configurations or using the same UE discontinuous transmission/reception configuration or using an intersection of different UE discontinuous transmission/reception configurations or using a union of different discontinuous transmission/reception configurations or performing the same UE discontinuous transmission/reception behaviour or performing different UE discontinuous transmission/reception behaviours; or
when the UE uses the same network discontinuous communication configuration for different cells, using, by the UE, the same UE discontinuous transmission/reception configuration for different cells or performing the same UE discontinuous transmission/reception behaviour for different cells, or using the same UE discontinuous transmission/reception configuration for the UE or a MAC entity or performing the same UE discontinuous transmission/reception behaviour for the UE or the MAC entity, wherein
the UE discontinuous transmission/reception configuration comprises a DTX configuration and/or a DRX configuration, and the UE discontinuous transmission/reception behaviour comprises UE DTX and/or DRX.

42. The method of any of claims 20 to 41, further comprising:
when network discontinuous communication is in a non-active state, stopping, by the UE, performing an ongoing third UE behaviour, or stopping performing a new third UE behaviour after the ongoing third UE behaviour is performed, wherein
the third UE behaviour comprises at least one of: random access, paging, or paging response.

43. A wireless communication method, comprising:
sending, by a base station, target information for a cell and/or a frequency to a equipment (UE), wherein the target information indicates to the UE to perform cell selection or cell reselection or access control, or the target information indicates to the UE to perform cell selection or cell reselection.

44. The method of claim 43, wherein sending, by the base station, the target information for the cell or the frequency to the UE comprises:
sending, by the base station, target information for a target cell and/or a target frequency to the UE.

45. The method of claim 44, wherein the target information is carried in at least one of: a radio resource control (RRC) message, system information, a system information block (SIB) message, or a master information block (MIB) message.

46. The method of claim 45, wherein when the target information is carried in system information, an MIB, and/or an SIB, the target information comprises at least one of:
a cell selection parameter for a candidate cell or a cell to be camped on or a cell to be selected;
a cell reselection parameter for a candidate cell or a cell to be camped on or a cell to be selected;
a cell measurement parameter for a candidate cell or a cell to be camped on or a cell to be selected;
a cell selection parameter for a cell at a candidate frequency or a frequency to be camped on or a frequency to be selected;
a cell reselection parameter for a cell at a candidate frequency or a frequency to be camped on or a frequency to be selected;
a cell measurement parameter for a cell at a candidate frequency or a frequency to be camped on or a frequency to be selected;
a cell selection parameter for the target cell;
a cell reselection parameter for the target cell;
a cell measurement parameter for the target cell;
a cell selection parameter for the target frequency;
a cell reselection parameter for the target frequency;
a cell measurement parameter for the target frequency;
a measurement parameter for the target frequency;
a selection or reselection parameter for the target frequency;
a priority of the target frequency;
a cell selection parameter for another inter-frequency cell;
a cell reselection parameter for another inter-frequency cell;
a cell measurement parameter for another inter-frequency cell;
a cell selection parameter for another intra-frequency cell;
a cell reselection parameter for another intra-frequency cell;
a cell measurement parameter for another intra-frequency cell;
a frequency list;
a frequency priority;
a cell-level measurement parameter;
a parameter corresponding to S criteria;
a parameter corresponding to R criteria;
a unified access control (UAC) parameter;
a parameter used for determining a frequency priority in inter-frequency selection;
a list of cells that are allowed for access;
a list of cells that are barred for access;
a cell selection parameter for a neighbour-frequency cell;
a cell reselection parameter for a neighbour-frequency cell;
a cell selection parameter for a neighbour frequency; or
a cell reselection parameter for a neighbour frequency.

47. The method of any of claims 44 to 46, wherein
the target information indicates to the UE to perform cell selection or cell reselection or access control according to the target information and capability information of the UE, or the target information indicates to the UE to perform cell selection or cell reselection according to the target information and the capability information of the UE, wherein
the capability information indicates whether the UE supports a specific function, or whether the UE has a network energy saving (NES) capability, or whether the UE supports an NES technology, or whether the UE is capable of supporting a specific function, or whether the UE is capable of supporting NES, or whether the UE supports an NES mode.

48. The method of any of claims 44 to 47, wherein
the target cell is a cell supporting a specific function, or a cell supporting an NES mode, or a cell to which an NES technology is applied;
the target frequency is a frequency supporting a specific function, or a frequency supporting an NES mode, or a frequency to which an NES technology is applied.

49. The method of claim 44 or 48, wherein
the cell and/or the frequency is available for a first-type UE and a second-type UE to access, select, or reselect; or
the cell and/or the frequency is allowed for the first-type UE and the second-type UE to access, select or reselect; or
the cell and/or the frequency is available only for the first-type UE to access, select, or reselect; or
the cell and/or the frequency is allowed only for the first-type UE to access, select, or reselect; or
the target cell and/or the target frequency is available for the first-type UE and the second-type UE to access, select, or reselect; or
the target cell and/or the target frequency is allowed for the first-type UE and the second-type UE to access, select, or reselect; or
the target cell and/or the target frequency is available only for the first-type UE to access, select, or reselect; or
the target cell and/or the target frequency is allowed only for the first-type UE to access, select, or reselect.

50. The method of claim 49, wherein
the first-type UE is a UE supporting a specific function, or an NES-capable UE, or a UE supporting an NES technology, or a UE capable of supporting a specific function, or a UE capable of supporting NES, or a UE supporting an NES mode, or a specific-version UE;
the second-type UE is a UE that does not support a specific function, or a non-NES-capable UE, or a UE that does not support an NES technology, or a UE not capable of supporting a specific function, or a UE not capable of supporting NES, or a UE that does not support an NES mode, a non specific-version UE, or an existing UE type.

51. The method of claim 50, wherein the target information indicates to the first-type UE and the second-type UE to perform different cell selection procedures or cell reselection procedures or access control procedures, or indicates to the first-type UE and the second-type UE to apply different cell selection rules or cell reselection rules or access control rules, or indicates to the first-type UE and the second-type UE to use different cell selection configurations or cell reselection configurations or access control configurations; or the target information is used for the first-type UE and the second-type UE to perform different cell selection procedures or cell reselection procedures or access control procedures, or is used for the first-type UE and the second-type UE to apply different cell selection rules or cell reselection rules or access control rules, or is used for the first-type UE and the second-type UE to use different cell selection configurations or cell reselection configurations or access control configurations.

52. The method of claim 51, wherein the target information comprises two different sets of configurations or parameters, and the two different sets of configurations or parameters are used separately for the first-type UE and the second-type UE to perform cell selection or cell reselection or access control.

53. The method of claim 51, wherein the target information comprises one set of cell-related configurations and/or adjustment indication information, wherein
the set of cell-related configurations is used for the UE to perform cell selection or cell reselection or access control;
the adjustment indication information indicates to the UE to adjust, according to the adjustment indication information, some or all parameters, priorities of some or all frequencies, priorities of some or all cells, a configuration for a cell and/or a frequency, or a parameter for a cell and/or a frequency in the set of cell-related configurations.

54. The method of any of claims 51 to 53, wherein the target information comprises one set of frequency-related configurations and/or adjustment indication information, wherein
the set of frequency-related configuration is used for the UE to perform cell selection or cell reselection or access control;
the adjustment indication information indicates to the UE to adjust, according to the adjustment indication information, some or all parameters, priorities of some or all frequencies, a configuration for a cell and/or a frequency, or a parameter for a cell and/or a frequency in the set of frequency-related configurations.

55. The method of claim 51, wherein the target information comprises one set of cell-related configurations and/or a cell identity (ID), wherein
the set of cell-related configurations is used for the UE to perform cell selection or cell reselection or access control;
the cell ID indicates at least one of:
whether the target cell is a cell supporting a specific function, or a cell supporting an NES mode, or a cell to which an NES technology is applied;
whether the UE is to adjust, based on the cell ID, a parameter for cell selection or cell reselection or access control;
an adjustment mode or adjustment amount of a configuration for a cell and/or a frequency;
an adjustment mode or adjustment amount of a parameter for a cell and/or a frequency;
priorities of some or all frequencies; or
priorities of some or all cells.

56. The method of any of claims 51 to 55, wherein the target information comprises one set of frequency-related configurations and/or a frequency ID, wherein
the set of frequency-related configurations is used for the UE to perform cell selection or cell reselection or access control;
the frequency ID indicates at least one of:
whether the target cell is a cell supporting a specific function, or a cell supporting an NES mode, or a cell to which an NES technology is applied;
whether the UE is to adjust, based on the frequency ID, a parameter used for cell selection or cell reselection or access control;
an adjustment mode or adjustment amount of a configuration for a cell and/or a frequency;
an adjustment mode or adjustment amount of a parameter for a cell and/or a frequency;
priorities of some or all frequencies; or
priorities of some or all cells.

57. The method of any of claims 53 to 56, wherein a parameter adjustment value or adjustment threshold is at least one of:
pre-defined, pre-configured, stored at the UE, indicated by RRC, indicated by dedicated information, carried in RRC release, or indicated by system information.

58. The method of claim 50, further comprising:
sending, by the base station, first indication information and/or second indication information to the UE, wherein
the first indication information is used for barring the second-type UE from accessing or selecting or reselecting the target cell or the target frequency;
the second indication information is used for allowing the first-type UE to access or select or reselect the target cell or the target frequency.

59. The method of claim 58, wherein the target information comprises a first configuration or parameter, wherein
the first configuration or parameter indicates a cell selection parameter or a cell reselection parameter or an access control parameter corresponding to the first-type UE; or
the first configuration or parameter is used for cell selection or cell reselection or access control corresponding to the first-type UE.

60. The method of claim 59, wherein all the first-type UEs perform the same cell selection or reselection or access control procedure, or all the first-type UEs apply the same cell selection or reselection or access control rule; or all the first-type UEs use the same cell selection or reselection or access control configuration.

61. The method of claim 58, wherein
the first indication information is carried in a cell bar field in an MIB, or the first indication information is carried in a reserved field in an SIB, or the first indication information is carried in a list of cells/frequencies allowed for access in an SIB, or the first indication information is carried in a list of cells/frequencies barred for access in the SIB; and
the second indication information is carried in an SIB.

62. A wireless communication method, comprising:
receiving, by a user equipment (UE), target information for a cell and/or a frequency sent by a base station; and
performing, by the UE, cell selection or cell reselection or access control according to the target information, or performing cell selection or cell reselection according to the target information.

63. The method of claim 60, wherein receiving, by the UE, the target information for the cell and/or the frequency sent by the base station comprises:
receiving, by the UE, target information for a target cell and/or a target frequency sent by the base station.

64. The method of claim 63, wherein the target information is carried in at least one of: a radio resource control (RRC) message, system information, a system information block (SIB) message, or a master information block (MIB) message.

65. The method of claim 64, wherein when the target information is carried in system information, an MIB, and/or an SIB, the target information comprises at least one of:
a cell selection parameter for a candidate cell or a cell to be camped on or a cell to be selected;
a cell reselection parameter for a candidate cell or a cell to be camped on or a cell to be selected;
a cell measurement parameter for a candidate cell or a cell to be camped on or a cell to be selected;
a cell selection parameter for a cell at a candidate frequency or a frequency to be camped on or a frequency to be selected;
a cell reselection parameter for a cell at a candidate frequency or a frequency to be camped on or a frequency to be selected;
a cell measurement parameter for a cell at a candidate frequency or a frequency to be camped on or a frequency to be selected;
a cell selection parameter for the target cell;
a cell reselection parameter for the target cell;
a cell measurement parameter for the target cell;
a cell selection parameter for the target frequency;
a cell reselection parameter for the target frequency;
a cell measurement parameter for the target frequency;
a measurement parameter for the target frequency;
a selection or reselection parameter for the target frequency;
a priority of the target frequency;
a cell selection parameter for another inter-frequency cell;
a cell reselection parameter for another inter-frequency cell;
a cell measurement parameter for another inter-frequency cell;
a cell selection parameter for another intra-frequency cell;
a cell reselection parameter for another intra-frequency cell;
a cell measurement parameter for another intra-frequency cell;
a frequency list;
a frequency priority;
a cell-level measurement parameter;
a parameter corresponding to S criteria;
a parameter corresponding to R criteria;
a unified access control (UAC) parameter;
a parameter used for determining a frequency priority in inter-frequency selection;
a list of cells that are allowed for access;
a list of cells that are barred for access;
a cell selection parameter for a neighbour-frequency cell;
a cell reselection parameter for a neighbour-frequency cell;
a cell selection parameter for a neighbour frequency; or
a cell reselection parameter for a neighbour frequency.

66. The method of any of claims 63 to 65, wherein performing, by the UE, cell selection or cell reselection or access control according to the target information or performing cell selection or cell reselection according to the target information comprises:
performing, by the UE, cell selection or cell reselection or access control according to the target information and capability information of the UE, or performing cell selection or cell reselection according to the target information and the capability information of the UE, wherein
the capability information indicates whether the UE supports a specific function, or whether the UE has a network energy saving (NES) capability, or whether the UE supports an NES technology, or whether the UE is capable of supporting a specific function, or whether the UE is capable of supporting NES, or whether the UE supports an NES mode.

67. The method of any of claims 63 to 66, wherein
the target cell is a cell supporting a specific function, or a cell supporting an NES mode, or a cell to which an NES technology is applied;
the target frequency is a frequency supporting a specific function, or a frequency supporting an NES mode, or a frequency to which an NES technology is applied.

68. The method of claim 67, wherein
the cell and/or the frequency is available for a first-type UE and a second-type UE to access, select, or reselect; or
the cell and/or the frequency is allowed for the first-type UE and the second-type UE to access, select or reselect; or
the cell and/or the frequency is available only for the first-type UE to access, select, or reselect; or
the cell and/or the frequency is allowed only for the first-type UE to access, select, or reselect; or
the target cell or the target frequency is available for the first-type UE and the second-type UE to access, select, or reselect; or
the target cell or the target frequency is allowed for the first-type UE and the second-type UE to access, select, or reselect; or
the target cell or the target frequency is available only for the first-type UE to access, select, or reselect; or
the target cell or the target frequency is allowed only for the first-type UE to access, select, or reselect.

69. The method of claim 68, wherein
the first-type UE is a UE supporting a specific function, or an NES-capable UE, or a UE supporting an NES technology, or a UE capable of supporting a specific function, or a UE capable of supporting NES, or a UE supporting an NES mode, or a specific-version UE;
the second-type UE is a UE that does not support a specific function, or a non-NES-capable UE, or a UE that does not support an NES technology, or a UE not capable of supporting a specific function, or a UE not capable of supporting NES, or a UE that does not support an NES mode, a non specific-version UE, or an existing UE type.

70. The method of claim 69, wherein the target information indicates to the first-type UE and the second-type UE to perform different cell selection procedures or cell reselection procedures or access control procedures, or indicates to the first-type UE and the second-type UE to apply different cell selection rules or cell reselection rules or access control rules, or indicates to the first-type UE and the second-type UE to use different cell selection configurations or cell reselection configurations or access control configurations; or the target information is used for the first-type UE and the second-type UE to perform different cell selection procedures or cell reselection procedures or access control procedures, or is used for the first-type UE and the second-type UE to apply different cell selection rules or cell reselection rules or access control rules, or is used for the first-type UE and the second-type UE to use different cell selection configurations or cell reselection configurations or access control configurations.

71. The method of claim 70, wherein the target information comprises two different sets of configurations or parameters, and the two different sets of configurations or parameters are used separately for the first-type UE and the second-type UE to perform cell selection or cell reselection or access control.

72. The method of claim 66, wherein the target information comprises one set of cell-related configurations and/or adjustment indication information, wherein
the set of cell-related configurations is used for the UE to perform cell selection or cell reselection or access control;
the adjustment indication information indicates to the UE to adjust, according to the adjustment indication information, some or all parameters, priorities of some or all frequencies, priorities of some or all cells, a configuration for a cell and/or a frequency, or a parameter for a cell and/or a frequency in the set of cell-related configurations.

73. The method of claim 70, wherein the target information comprises one set of frequency-related configurations and/or adjustment indication information, wherein
the set of frequency-related configuration is used for the UE to perform cell selection or cell reselection or access control;
the adjustment indication information indicates to the UE to adjust, according to the adjustment indication information, some or all parameters, priorities of some or all frequencies, a configuration for a cell and/or a frequency, or a parameter for a cell and/or a frequency in the set of frequency-related configurations.

74. The method of claim 70, wherein the target information comprises one set of cell-related configurations and/or a cell identity (ID), wherein
the set of cell-related configurations is used for the UE to perform cell selection or cell reselection or access control;
the cell ID indicates at least one of:
whether the target cell is a cell supporting a specific function, or a cell supporting an NES mode, or a cell to which an NES technology is applied;
whether the UE is to adjust, based on the cell ID, a parameter for cell selection or cell reselection or access control;
an adjustment mode or adjustment amount of a configuration for a cell and/or a frequency;
an adjustment mode or adjustment amount of a parameter for a cell and/or a frequency;
priorities of some or all frequencies; or
priorities of some or all cells.

75. The method of claim 70, wherein the target information comprises one set of frequency-related configurations and/or a frequency ID, wherein
the set of frequency-related configurations is used for the UE to perform cell selection or cell reselection or access control;
the frequency ID indicates at least one of:
whether the target cell is a cell supporting a specific function, or a cell supporting an NES mode, or a cell to which an NES technology is applied;
whether the UE is to adjust, based on the frequency ID, a parameter used for cell selection or cell reselection or access control;
an adjustment mode or adjustment amount of a configuration for a cell and/or a frequency;
an adjustment mode or adjustment amount of a parameter for a cell and/or a frequency;
priorities of some or all frequencies; or
priorities of some or all cells.

76. The method of any of claims 72 to 75, wherein a parameter adjustment value or adjustment threshold is at least one of:
pre-defined, pre-configured, stored at the UE, indicated by RRC, indicated by dedicated information, carried in RRC release, or indicated by system information.

77. The method of claim 69, further comprising:
receiving, by the UE, first indication information and/or second indication information sent by the base station, wherein
the first indication information is used for barring the second-type UE from accessing or selecting or reselecting the target cell or the target frequency;
the second indication information is used for allowing the first-type UE to access or select or reselect the target cell or the target frequency.

78. The method of claim 77, wherein the target information comprises a first configuration or parameter, wherein
the first configuration or parameter indicates a cell selection parameter or a cell reselection parameter or an access control parameter corresponding to the first-type UE; or
the first configuration or parameter is used for cell selection or cell reselection or access control corresponding to the first-type UE.

79. The method of claim 78, wherein all the first-type UEs perform the same cell selection or reselection or access control procedure, or all the first-type UEs apply the same cell selection or reselection or access control rule; or all the first-type UEs use the same cell selection or reselection or access control configuration.

80. The method of claim 77, wherein
the first indication information is carried in a cell bar field in an MIB, or the first indication information is carried in a reserved field in an SIB, or the first indication information is carried in a list of cells/frequencies allowed for access in an SIB, or the first indication information is carried in a list of cells/frequencies barred for access in the SIB; and
the second indication information is carried in an SIB.

81. A wireless communication method, comprising:
performing, by a user equipment (UE), a first behaviour, wherein
the first behaviour comprises at least one of: random access, data transmission, cell selection, cell reselection, handover, RRC state transition, system information acquisition, synchronization, camping, paging, or paging response.

82. The method of claim 81, wherein the UE performs the first behaviour when multiple carriers are deployed, or when multiple carriers are configured, or when there is a first cell, or when there is a first cell and a second cell, wherein
the first cell is a cell supporting a specific function, or a cell supporting a network energy saving (NES) mode, or a cell to which an NES technology is applied, or a non-anchor cell, or a cell in which some information is not to be sent;
the second cell is a cell different from the first cell, or an anchor cell, or a cell for assisting transmission or access in the first cell, or a secondary cell (Scell) or anchor cell of the first cell, or a cell in which information of the first cell or some of the information of the first cell is to be sent.

83. The method of claim 72, wherein
in the first cell, a synchronization signal block (SSB) and/or a master information block (MIB) is to be transmitted, but no system information block (SIB) or system information is to be transmitted; or
in the first cell, no SSB and/or MIB is to be transmitted, and no SIB or system information is to be transmitted.

84. The method of claim 81, wherein performing, by the UE, the first behaviour comprises one of:
performing, by the UE, the first behaviour based on the first cell or the second cell;
performing, by the UE, the first behaviour based on the first cell and the second cell; or
performing, by the UE, a second behaviour in the first behaviour based on the first cell, and performing a third behaviour in the first behaviour based on the second cell, wherein
the second behaviour is different from or partially the same as the third behaviour.

85. The method of claim 84, comprising:
when an SSB and/or an MIB is to be transmitted but no SIB or system information is to be transmitted in the first cell, performing, by the UE, the first behaviour based on the first cell, or performing the first behaviour based on the second cell, or performing the second behaviour based on the first cell and performing the third behaviour based on the second cell.

86. The method of claim 85, comprising:
prioritizing, by the UE, performing the first behaviour or the third behaviour based on the second cell.

87. The method of claim 84, comprising:
when no SSB and/or MIB is to be transmitted and no SIB or system information is to be transmitted in the first cell, performing, by the UE, the first behaviour based on the second cell, or performing the second behaviour based on the first cell and performing the third behaviour based on the second cell.

88. The method of any of claims 84 to 87, wherein
the second behaviour comprises at least one of: random access, data transmission, handover, or RRC state transition, and the third behaviour comprises at least one of: camping, paging, paging response, system information acquisition, cell selection, cell reselection, or RRC state transition; or
the second behaviour comprises at least one of: random access, data transmission, handover, or RRC state transition, and the third behaviour comprises at least one of: camping, paging, paging response, system information acquisition, cell selection, cell reselection, RRC state transition, random access, data transmission, or handover; or
the second behaviour comprises at least one of: camping, paging, paging response, system information acquisition, cell selection, cell reselection, random access, data transmission, handover, or RRC state transition, and the third behaviour comprises at least one of: camping, paging, paging response, system information acquisition, cell selection, cell reselection, or RRC state transition; or
the second behaviour comprises at least one of: camping, paging, paging response, system information acquisition, cell selection, cell reselection, random access, data transmission, handover, or state transition, and the third behaviour comprises at least one of: camping, paging, paging response, system information acquisition, cell selection, cell reselection, RRC state transition, random access, data transmission, or handover.

89. The method of any of claims 84 to 88, further comprising:
selecting, by the UE, to perform the first behaviour in the first cell and/or the second cell, and/or selecting to perform the second behaviour in the first cell, and/or selecting to perform the third behaviour in the second cell; or
based on a first rule or a first policy or network indication or UE selection criteria, selecting, by the UE, to perform the first behaviour in the first cell and/or the second cell, and/or selecting to perform the second behaviour in the first cell, and/or selecting to perform the third behaviour in the second cell.

90. The method of claim 89, wherein the first rule, the first policy, the network indication, or the UE selection criteria comprises at least one of:
the first rule or the first policy being configured by a network side;
a selection threshold or parameter or condition configured or indicated by a network;
the network configuring or indicating to perform the first behaviour or the second behaviour or the third behaviour in the first cell or the second cell;
content of the first behaviour configured or indicated by the network;
content of the second behaviour configured or indicated by the network;
content of the third behaviour configured or indicated by the network;
an amount of data to be transmitted;
a priority order;
whether a random access configuration for the first cell is acquired by the UE;
whether a data transmission configuration for the first cell is acquired by the UE;
whether data transmission scheduling for the first cell is acquired by the UE; or
a signal strength.

91. The method of claim 83, further comprising:
when no SIB is to be transmitted in the first cell, acquiring, by the UE, system information of the first cell or an update of the system information of the first cell from the second cell; or
when no SIB is to be transmitted in the first cell, acquiring, by the UE, SIB1 of the first cell or an update of SIB1 system information of the first cell from the second cell.

92. The method of any of claims 81 to 91, further comprising:
returning to or reselecting the second cell by the UE when the UE has entered an idle state or an inactive state or the UE has left a connected state; and/or
performing, by the UE, at least one of: camping, paging monitoring, paging response, cell selection, or cell reselection in the second cell when the UE is in the idle state or the inactive state; and/or
entering, by the UE, the connected state in the second cell when the UE is in the idle state or the inactive state; and/or
entering, by the UE, the connected state in the second cell or the first cell when the UE is in the idle state or the inactive state; and/or
performing, by the UE, data transmission in the second cell when the UE has entered the connected state in the second cell from the idle state or the inactive state; and/or
performing, by the UE, data transmission in the second cell when the UE has entered the connected state in the second cell from the idle state or the inactive state, or performing, by the UE, data transmission in the first cell when the UE has entered the connected state in the first cell from the idle state or the inactive state; and/or
performing, by the UE, data transmission in the second cell until the UE leaves the connected state when the UE has entered the connected state in the second cell from the idle state or the inactive state; and/or
performing, by the UE, data transmission in the second cell until the UE leaves the connected state when the UE has entered the connected state in the second cell from the idle state or the inactive state, or performing, by the UE, data transmission in the first cell until the UE leaves the connected state when the UE has entered the connected state in the first cell from the idle state or the inactive state.

93. A wireless communication apparatus, applied to a base station and comprising:
a sending module configured to send a network discontinuous communication configuration to a user equipment (UE), wherein the network discontinuous communication configuration comprises a network discontinuous communication configuration for a cell and/or a network discontinuous communication configuration for the base station.

94. A wireless communication apparatus, applied to a user equipment (UE) and comprising:
a receiving module configured to receive a network discontinuous communication configuration sent by a base station, wherein the network discontinuous communication configuration comprises a network discontinuous communication configuration for a cell and/or a network discontinuous communication configuration for the base station.

95. A wireless communication apparatus, applied to a base station and comprising:
a sending module configured to send target information for a cell and/or a frequency to a equipment (UE), wherein the target information indicates to the UE to perform cell selection or cell reselection or access control, or the target information indicates to the UE to perform cell selection or cell reselection.

96. A wireless communication apparatus, applied to a user equipment (UE) and comprising:
a receiving module configured to receive target information of a cell and/or a frequency sent by a base station;
an executing module configured to perform cell selection or cell reselection or access control according to the target information, or perform cell selection or cell reselection according to the target information.

97. A wireless communication apparatus, applied to a user equipment (UE) and comprising:
an executing module configured to perform a first behaviour, wherein
the first behaviour comprises at least one of: random access, data transmission, cell selection, cell reselection, handover, RRC state transition, system information acquisition, synchronization, camping, paging, or paging response.

98. A terminal device, comprising:
a memory configured to store computer programs, and
a processor configured to invoke and execute the computer programs stored in the memory, to perform the method of any of claims 20 to 42; or, to perform the method of any of claims 62 to 80, or to perform the method of any of claims 81 to 92.

99. A network device, comprising:
a memory configured to store computer programs, and
a processor configured to invoke and execute the computer programs stored in the memory, to perform the method of any of claims 1 to 19 or to perform the method of any of claims 43 to 61.

100. A chip, comprising:
a processor configured to invoke and run computer programs from a memory, to cause a device equipped with the chip to perform the method of any of claims 20 to 42, or to cause a device equipped with the chip to perform the method of any of claims 62 to 80, or to cause a device equipped with the chip to perform the method of any of claims 81 to 92.

101. A chip, comprising:
a processor configured to invoke and run computer programs from a memory, to cause a device equipped with the chip to perform the method of any of claims 1 to 19, or to cause a device equipped with the chip to perform the method of any of claims 43 to 61.

102. A computer-readable storage medium, configured to store computer programs which are operable with a computer to perform the method of any of claims 20 to 42, or operable with a computer to perform the method of any of claims 62 to 80, or operable with a computer to perform the method of any of claims 81 to 92.

103. A computer-readable storage medium, configured to store a computer programs which are operable with a computer to perform the method of any of claims 1 to 19 or operable with a computer to perform the method of any of claims 43 to 61.

104. A computer program product, comprising computer program instructions which are operable with a computer to perform the method of any of claims 20 to 42, or operable with a computer to perform the method of any of claims 62 to 80, or operable with a computer to perform the method of any of claims 81 to 92.

105. A computer program product, comprising computer program instructions which are operable with a computer to perform the method of any of claims 1 to 19, or operable with a computer to perform the method of any of claims 43 to 61.

106. A computer program, being operable with a computer to perform the method of any of claims 20 to 42, or operable with a computer to perform the method of any of claims 62 to 80, or operable with a computer to perform the method of any of claims 81 to 92.

107. A computer program, being operable with a computer to perform the method of any of claims 1 to 19 or operable with a computer to perform the method of any of claims 43 to 61.
